# EUROPEAN PATENT APPLICATION

(11) **EP 4 610 529 A2**
(43) Date of publication of application: **03.09.2025**
(21) Application number: 25161244.6
(22) Date of filing: 03.03.2025
(51) Int. Cl.: F16K 3/10, F01P 7/00, F16K 3/314, F16K 3/34, F16K 11/074, F16K 11/16, F16K 31/04, F16K 31/53

(54) **SYSTEMS AND METHODS FOR A THERMAL MANAGEMENT CONTROL VALVE WITH A ROTATING LOUVER ASSEMBLY**

(30) Priority: 01.03.2024 US 202463560550 P
(71) Applicant: HUSCO Automotive Holdings LLC, Waukesha, WI 53188 (US)
(72) Inventor: KUJAK, Mike, Waukesha (US); HEIDEMANN, Brian, Waukesha (US); EVERSON, Ben, Waukesha (US); TEICH, Ben, Waukesha (US)
(74) Representative: Worthington, Richard Easton

(57) **Abstract**

A thermal management control valve a housing assembly having a first housing section and a second housing section, a rotary actuator coupled to a drive shaft, and a louver plate assembly. The louver plate assembly includes a louver plate having a louver cutout, a first seal assembly arranged between the louver plate and the first housing section, and a second seal assembly arranged between the louver plate and the second housing section. The first seal assembly includes a plurality of inner walls that define a plurality of first fluid passageways. The second seal assembly defines a second fluid passageway between. Selective rotation of the louver plate rotationally aligns the louver cutout with one or more of the plurality of first fluid passageways and the second fluid passageway to provide fluid communication between the one or more of the plurality of first fluid passageways and the second fluid passageway.

## Description

### CROSS-REFERENCE TO RELATED PATENT APPLICATIONS

This application claims the benefit of and priority to U.S. Provisional Application No. 63/560,550, filed on March 1, 2024, the entire disclosure of which is hereby incorporated by reference herein.

### BACKGROUND

Thermal control valves are used, for example, in hybrid and battery-powered vehicle applications to control a flow of working fluid that acts to heat or cool a device or component.

### SUMMARY

In some aspects, the present disclosure relates to a thermal management control valve including: a housing assembly including a first housing section and a second housing section; a rotary actuator coupled to a drive shaft that extends into the housing assembly; and a louver plate assembly enclosed within the housing assembly and including: a louver plate including a louver cutout extending through the louver plate, wherein the louver plate is coupled to the drive shaft so that selective rotation of the drive shaft is configured to rotate the louver plate; a first seal assembly arranged between the louver plate and the first housing section, wherein the first seal assembly includes a plurality of inner walls that define a plurality of first fluid passageways between the louver plate and the first housing section; and a second seal assembly arranged between the louver plate and the second housing section, wherein the second seal assembly defines a second fluid passageway between the louver plate and the second housing section, wherein selective rotation of the louver plate rotationally aligns the louver cutout with one or more of the plurality of first fluid passageways and the second fluid passageway to provide fluid communication between the one or more of the plurality of first fluid passageways and the second fluid passageway.

In some aspects, the present disclosure relates to a thermal management control valve including: a housing assembly including a first housing section and a second housing section, wherein the first housing section includes a plurality of first fluid ports and the second housing section includes a plurality of second fluid ports; a rotary actuator coupled to a drive shaft that extends into the housing assembly; and a louver plate assembly enclosed within the housing assembly and including: a louver plate including a louver cutout extending through the louver plate, wherein the louver plate is coupled to the drive shaft so that selective rotation of the drive shaft is configured to rotate the louver plate; a first seal assembly sealed between the louver plate and each of the plurality of first fluid ports; and a second seal assembly sealed between the louver plate and each of the plurality of second fluid ports, wherein selective rotation of the louver plate rotationally aligns the louver cutout with one or more of the plurality of first fluid ports and one or more of the plurality of second fluid ports to provide fluid communication between the one or more of the plurality of first fluid ports and the one or more of the plurality of second fluid ports.

In some aspects, the present disclosure relates to a thermal management control valve including: a housing assembly including a first housing section and a second housing section; a rotary actuator coupled to a drive shaft that extends into the housing assembly; a first louver plate assembly enclosed within the housing assembly and including a first louver plate arranged about a first central axis; and a second louver plate assembly enclosed within the housing assembly and including a second louver plate arranged about a second central axis that is spaced from the first central axis, wherein the first louver plate assembly and the second louver plate assembly both include a first seal plate assembly and a second seal plate assembly, wherein the first seal plate assembly of the first louver plate assembly is sealed between the first louver plate and the first housing section, and the second seal plate assembly of the first louver plate assembly is sealed between the first louver plate and the second housing section, wherein the first seal plate assembly of the second louver plate assembly is sealed between the second louver plate and the first housing section, and the second seal plate assembly of the second louver plate assembly is sealed between the second louver plate and the second housing section, and wherein selective rotation of the drive shaft is configured to rotate the first louver plate and the second louver plate in opposing directions.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE FIGURES

The disclosure will become more fully understood from the following detailed description, taken in conjunction with the accompanying figures, wherein like reference numerals refer to like elements, in which:
FIG. 1 is a perspective view of a thermal management control valve, according to an exemplary embodiment;
FIG. 2 is an exploded view of the thermal management control valve of FIG. 1;
FIG. 3 is a top view of the thermal management control valve of FIG. 1;
FIG. 4 is a bottom view of the thermal management control valve of FIG. 1;
FIG. 5 is a perspective view of a first seal assembly of a first louver assembly of the thermal management control valve of FIG. 1;
FIG. 6 is a top view of the first seal assembly of FIG. 5;
FIG. 7 is a perspective view of a second seal assembly of a first louver assembly of the thermal management control valve of FIG. 1;
FIG. 8 is a top view of the second seal assembly of FIG. 7;
FIG. 9 is a perspective view of a first seal assembly of a second louver assembly of the thermal management control valve of FIG. 1;
FIG. 10 is a top view of the first seal assembly of FIG. 9;
FIG. 11 is a perspective view of a second seal assembly of a second louver assembly of the thermal management control valve of FIG. 1;
FIG. 12 is a top view of the second seal assembly of FIG. 11;
FIG. 13 is a bottom perspective view of a first housing section of a first louver assembly of the thermal management control valve of FIG. 1;
FIG. 14 is a top perspective view of a first louver assembly of the thermal management control valve of FIG. 1;
FIG. 15 is a top view of a first louver assembly of the thermal management control valve of FIG. 1, with a first housing section removed;
FIG. 16 is a top view of a first louver assembly of the thermal management control valve of FIG. 1, with a first housing section and a first seal assembly of both a first louver assembly and a second louver assembly removed;
FIG. 17 is a cross-sectional view of a first louver assembly of the thermal management control valve of FIG. 1;
FIG. 18 is a perspective view of a first louver assembly of the thermal management control valve of FIG. 1, including a plurality of fluid ports;
FIG. 19 is a top cross-sectional view of the thermal management control valve of FIG. 18;
FIG. 20 is a bottom cross-sectional view of the thermal management control valve of FIG. 18;
FIG. 21 is a top view of a flow control assembly of the thermal management control valve of FIG. 1 in a first operating mode;
FIG. 22 is a top view of a flow control assembly of the thermal management control valve of FIG. 1 in a first intermediate operating mode;
FIG. 23 is a top view of a flow control assembly of the thermal management control valve of FIG. 1 in a second operating mode;
FIG. 24 is a top view of a flow control assembly of the thermal management control valve of FIG. 1 in a third operating mode;
FIG. 25 is a top view of a flow control assembly of the thermal management control valve of FIG. 1 in a third intermediate operating mode;
FIG. 26 is a top view of a flow control assembly of the thermal management control valve of FIG. 1 in a fourth operating mode;
FIG. 27 is a top view of a flow control assembly of the thermal management control valve of FIG. 1 in a fourth intermediate operating mode;
FIG. 28 is a top view of a flow control assembly of the thermal management control valve of FIG. 1 in a fifth operating mode;
FIG. 29 is a perspective view of a thermal management control valve, according to an exemplary embodiment;
FIG. 30 is an exploded view of the thermal management control valve of FIG. 29 with a rotary actuator removed;
FIG. 31 is a top view of the thermal management control valve of FIG. 29 with a rotary actuator removed;
FIG. 32 is a bottom perspective view of the thermal management control valve of FIG. 29 with a rotary actuator removed;
FIG. 33 is a bottom view of the thermal management control valve of FIG. 29 in a first position;
FIG. 34 is a bottom view of the thermal management control valve of FIG. 29 in a first intermediate position;
FIG. 35 is a bottom view of the thermal management control valve of FIG. 29 in a second intermediate position;
FIG. 36 is a bottom view of the thermal management control valve of FIG. 29 in a second position; and
FIG. 37 is a cross-sectional view of the thermal management control valve of FIG. 29 within a housing assembly.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

The use herein of the term "axial" and variations thereof refers to a direction that extends generally along an axis of symmetry, a central axis, or an elongate direction of a particular component or system. For example, axially extending features of a component may be features that extend generally along a direction that is parallel to an axis of symmetry or an elongate direction of that component. Similarly, the use herein of the term "radial" and variations thereof refers to directions that are generally perpendicular to a corresponding axial direction. For example, a radially extending structure of a component may generally extend at least partly along a direction that is perpendicular to a longitudinal or central axis of that component. The use herein of the term "circumferential" and variations thereof refers to a direction that extends generally around a circumference of an object or around an axis of symmetry, a central axis or an elongate direction of a particular component or system.

Hybrid electric and battery electric vehicles include a high-voltage battery or an array of high-voltage battery packs that supply electric power to various components on the vehicle (e.g., drive motors, user interfaces, power take off (PTO) units, electric power steering motors, etc.). The automotive vehicle market (e.g., on-road or on-highway vehicles) is trending toward the development of longer all-electric ranges to allow a user to drive longer distances between battery charges. The demand for longer all-electric range requires batteries/battery packs with higher capacities that define a larger mounting footprint/volume, when compared to lower all-electric range vehicles. Also, increasing the battery/battery pack capacity typically increases the thermal management demand (e.g., heating and cooling capacities) required to provide temperature control of the battery/battery pack and the various other components on the vehicle that are actively or passively heated and/or cooled (e.g., power electronics, drive motors, HVAC systems etc.). So there is less space available to mount thermal management components (e.g., control valves, pumps, heat exchangers, conduits/tubing) and a need for the thermal management components to meet higher requirements for heating and cooling capacities, which is conventionally accommodated by using larger thermal management components.

The systems and methods of the present disclosure relate to a thermal management control valve that includes a flow control assembly (e.g., a louver plate assembly) that is selectively rotated to open/close various flow paths that within a housing of the thermal management control valve. The thermal management control valve includes a louver plate assembly having a louver plate, a first seal plate assembly arranged on a first side of the louver plate, and a second seal plate assembly arranged on a second side of the louver plate. In general, the first seal plate assembly defines one or more first sealed fluid channels or passageways between the louver plate and a corresponding number of first fluid ports, and the second seal plate assembly defines one or more second sealed fluid channels or passageways between the louver plate and a corresponding number of second fluid ports. The selective rotation of the louver plate aligns a cutout or slot formed in the louver plate with various combinations of the one or more first sealed fluid passageways and the one or more second sealed fluid passageways, which, in turn, provides fluid communication between various combinations of the first fluid ports and the second fluid ports. In this way, for example, the louver plate assembly is able service several flow paths and components (e.g., pumps, valves, heat exchangers) that receive fluid flow from the flow fluid ports, while maintaining a small packaging size (e.g., when compared to conventional thermal management control valves)

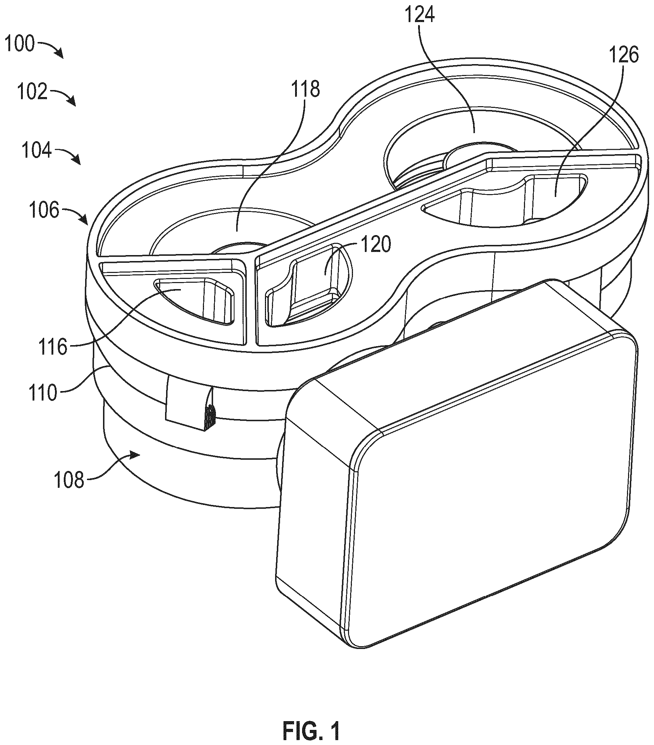

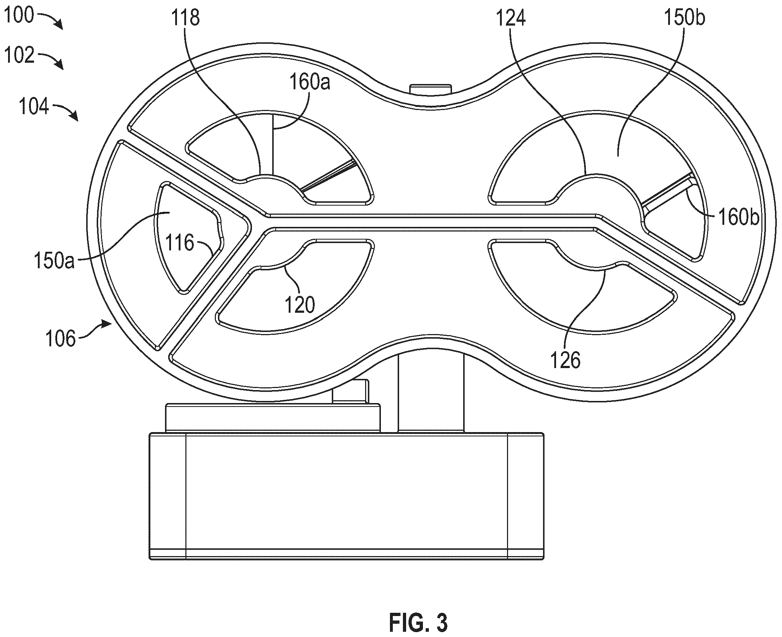

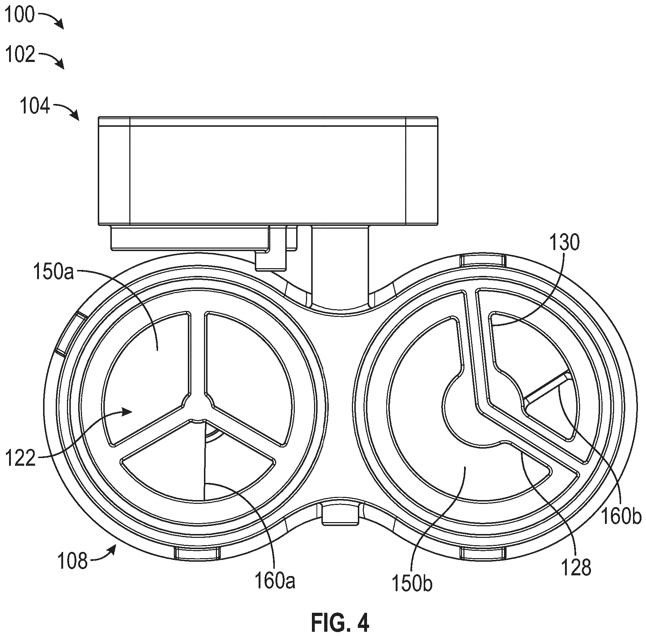

FIGS. 1-4 show a thermal management control valve 100, according to an exemplary embodiment of the present disclosure. In general, the thermal management control valve 100 is configured to control fluid flow (e.g., direction, routing, flowrate, and/or on/off control) for one or more working fluids in heating and/or cooling systems on an electric vehicle. The use of the term "electric vehicle" and variations thereof refers to a battery electric vehicle, a fully electric vehicle, a plug-in-hybrid vehicle, or a hybrid vehicle that is intended to be driven on a road or highway. In some embodiments, the thermal management control valve 100 provides flow control for a single type of working fluid (e.g., air, water, refrigerant, oil, etc.).

The thermal management control valve 100 includes a housing, shown as housing assembly 102, and a flow control assembly 104 enclosed within the housing assembly 102. The housing assembly 102 includes a first or upper housing section 106 and a second or lower housing section 108. In some embodiments, the first housing section 106 and the second housing section 108 are fabricated from a polymer or plastic material. In some embodiments, the first housing section 106 and the second housing section 108 are manufactured via a plastic injection molding.

In general, the coupling formed between the first housing section 106 and the second housing section 108 is formed along a coplanar interface. For example, a bonding interface 110 formed between the first housing section 106 and the second housing section 108 is formed between coplanar surfaces of the first housing section 106 and the second housing section 108. Forming the bonding interface 110 between coplanar surfaces forms coplanar bonding interfaces that enable a simplified and efficient bonding processes to be utilized to form the bonds between the first housing section 106 and the second housing section 108. Additionally, forming the bonds between the first housing section 106 and the second housing section 108 along a coplanar bonding interface improves the manufacturing efficiency of the housing assembly 102.

Each of the first housing section 106 and the second housing section 108 includes one or more ports that facilitate a connection between the housing assembly 102 and a thermal management component (e.g., a heat exchanger, a pump, a check valve, a conduit/tube, etc.) or another port. In general, the housing assembly 102 may be designed to include any port configuration (e.g., number and arrangement of the ports) dictated by a particular electric vehicle application. In some embodiments, the port configuration may be quickly and efficiently changed by modifying a mold design used to plastic injection mold the housing assembly 102, and/or by modifying the structure of the flow control assembly 104 as described herein.

In the exemplary embodiment, the flow control assembly 104 includes a first louver plate assembly 112 and a second louver plate assembly 114. Each of the first louver plate assembly 112 and the second louver plate assembly 114 is enclosed between the first housing section 106 and the second housing section 108 and is configured to selectively control fluid flow between a plurality of ports formed in the housing assembly 102. The inclusion of two louver plate assemblies in the thermal management control valve 100 is but one exemplary embodiment, and the thermal management control valve 100 may include a single louver plate assembly, or more than two louver plate assemblies, and still function to control fluid flow between a plurality of ports formed in the housing assembly 102, or other ports formed external to or in fluid communication with the housing assembly 102.

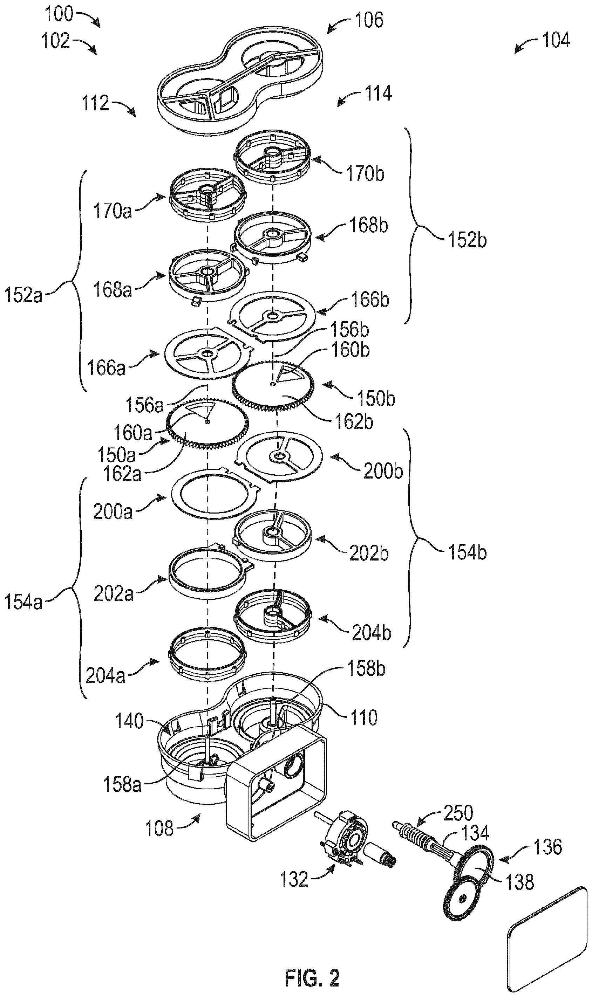

The first housing section 106 includes one or more ports, each defining a cutout, aperture, channel, passageway, or through hole, that allow fluid flow into or out of the housing assembly 102. In the exemplary embodiment, the first housing section 106 includes a first housing port 116, a second housing port 118, a third housing port 120, a fifth housing port 124, and a sixth housing port 126. The first housing port 116, the second housing port 118, and the third housing port 120 are arranged generally above (e.g., from the perspective of FIG. 2) and is in fluid communication with the first louver plate assembly 112, and the fifth housing port 124 and the sixth housing port 126 are arranged generally above (e.g., from the perspective of FIG. 2) and are in fluid communication with the second louver plate assembly 114. In some embodiments, the first housing port 116, the second housing port 118, the third housing port 120, the fifth housing port 124, and the sixth housing port 126 may each be in fluid communication with an individual connector, fitting, or tubing that delivers fluid flow to or from a thermal management component. In some embodiments, two or more of the first housing port 116, the second housing port 118, the third housing port 120, the fifth housing port 124, and the sixth housing port 126 may be in fluid communication with a common connector, fitting, or tubing that delivers fluid flow to or from a thermal management component. For example, in an exemplary embodiment, the second housing port 118 and the fifth housing port 124 may be in fluid communication with a common connector, fitting, or tubing, and the third housing port 120 and the sixth housing port 126 may be in fluid communication with a common connector, fitting, or tubing.

The second housing section 108 includes one or more ports, each defining a cutout, aperture, channel, passageway, or through hole, that allow fluid flow into or out of the housing assembly 102. In the exemplary embodiment, the second housing section 108 includes a fourth housing port 122, a seventh housing port 128, and an eighth housing port 130. The fourth housing port 122 is arranged generally below (e.g., from the perspective of FIG. 2) and is in fluid communication with the first louver plate assembly 112, and the seventh housing port 128 and the eighth housing port 130 are arranged generally below (e.g., from the perspective of FIG. 2) and are in fluid communication with the second louver plate assembly 114. In some embodiments, each of the fourth housing port 122, the seventh housing port 128, and the eighth housing port 130 may each be in fluid communication with an individual connector, fitting, or tubing that delivers fluid flow to or from a thermal management component. In some embodiments, two or more of the fourth housing port 122, the seventh housing port 128, and the eighth housing port 130 may be in fluid communication with a common connector, fitting, or tubing that delivers fluid flow to or from a thermal management component.

In general, the flow control assembly 104 is configured to selectively control fluid flow between the various ports of the housing assembly 102 (e.g., the first housing port 116, the second housing port 118, the third housing port 120, the fifth housing port 124, the sixth housing port 126, the fourth housing port 122, the seventh housing port 128, and the eighth housing port 130). In the exemplary embodiment, the flow control assembly 104 includes a rotary actuator 132 (e.g., a rotary motor, a stepper motor, an electric motor, etc.) that is coupled to each of the first louver plate assembly 112 and the second louver plate assembly 114. The rotary actuator 132 is coupled to a drive shaft 134 by a gear train 136. In some embodiments, the rotary actuator 132 may be directly coupled to the drive shaft 134 without the gear train 136 coupled between the drive shaft 134 and the rotary actuator 132.

During operation, the rotary actuator 132 is configured to rotate in a predetermined direction and a predetermined magnitude (e.g., a predetermined rotational distance) in response to energization of the rotary actuator 132. The rotary actuator 132 defines a drive axis 138 and extends into a louver cavity or chamber, shown as a louver manifold 140 formed within the housing assembly 102. For example, a portion of the louver manifold 140 may be formed by the first housing section 106 and a portion of the louver manifold 140 may be formed by the second housing section 108. When the first housing section 106 is installed on the second housing section 108, the respective portions of the louver manifold 140 formed by the first housing section 106 and the second housing section 108 define an enclosure that forms the louver manifold 140 and houses the components of the first louver plate assembly 112 and the second louver plate assembly 114.

The drive shaft 134 extends into the housing assembly 102 (e.g., into the second housing section 108) at a location that is offset (e.g., does not intersect with) from the bonding interface 110 formed between the first housing section 106 and the second housing section 108. In other words, an entirety of the drive shaft 134 is offset from the bonding interface 110. This offset arrangement of the drive shaft 134 enables the bonding interface 110 to maintain its coplanar orientation and the associated manufacturing advantages associated therewith. For example, the bonding interface 110 is not required to form a seal around a split interface that curves around opposing sides of the drive shaft 134.

In general, the first louver plate assembly 112 includes similar components as the second louver plate assembly 114 and both the first louver plate assembly 112 and the second louver plate assembly 114 provide similar functionality within the thermal management control valve 100. The individual components within the first louver plate assembly 112 and the second louver plate assembly 114 may not be identically designed, but the type, function, and number of components may be similar between the first louver plate assembly 112 and the second louver plate assembly 114. The components of the first louver plate assembly 112 described herein include the suffix "a" and the components of the second louver plate assembly 114 described herein include the suffix "b."

In the exemplary embodiment, the first louver plate assembly 112 includes a first louver plate 150a, a first seal assembly 152a (e.g., an upper seal assembly from the perspective of FIG. 2), and a second seal assembly 154a (e.g., a lower seal assembly from the perspective of FIG. 2). The first louver plate assembly 112 is arranged along a first central axis 156a, which is defined along a central rod or pin 158a. The first or upper seal assembly 152a is arranged between the first louver plate 150a and the first housing section 106 (e.g., in a direction along the first central axis 156a, and the second seal assembly 154a is arranged between the first louver plate 150a and the second housing section 108. In other words, the first seal assembly 152a and the second seal assembly 154a are arranged on opposing sides of the first louver plate 150a.

The first louver plate 150a defines a generally circular or round shape and includes a plurality of gear teeth arranged around an outer perimeter of the first louver plate 150a. A cutout, aperture, hole, slot, shown as louver cutout 160a extends through the first louver plate 150a. Specifically, the louver cutout 160a extends through both an upper or first louver surface 162a and a lower or second louver surface 164a. In the exemplary embodiment, the louver cutout 160a defines a generally triangular shape, with two straight edges and one convex or rounded edge. In some embodiments, the louver cutout 160a may be shaped differently (e.g., round, circular, rectangular, or another shape) to provide the appropriate connections between the sealed fluid channels or fluid passageways formed within the first louver plate assembly 112.

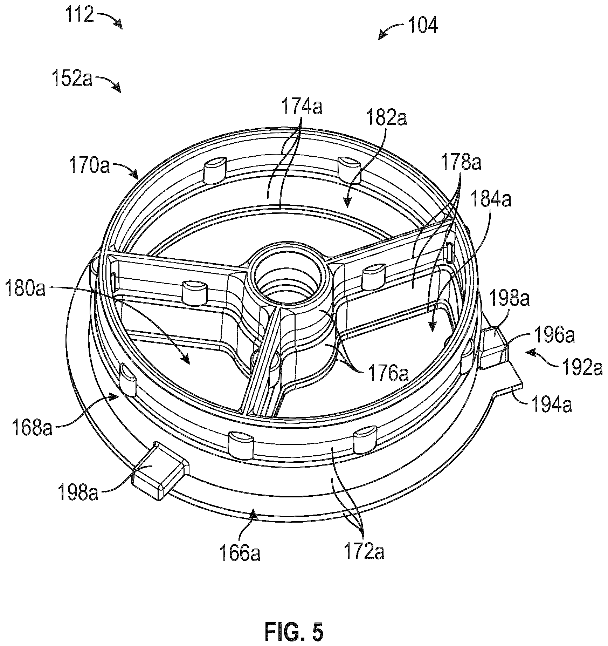

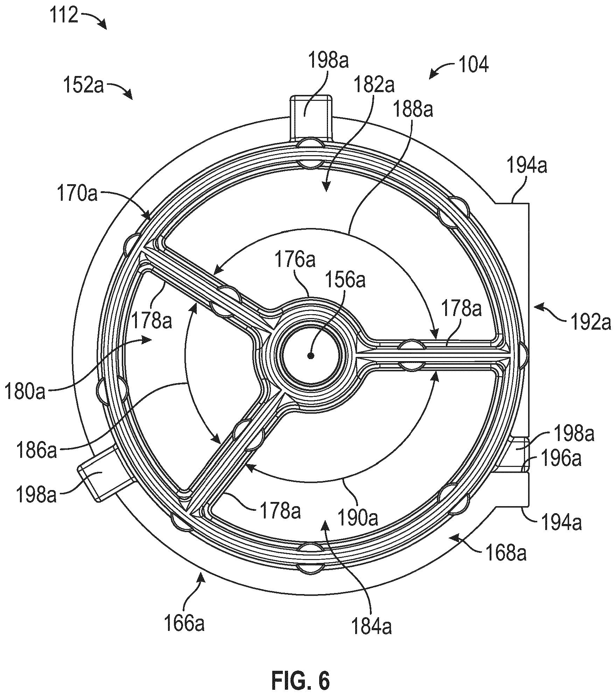

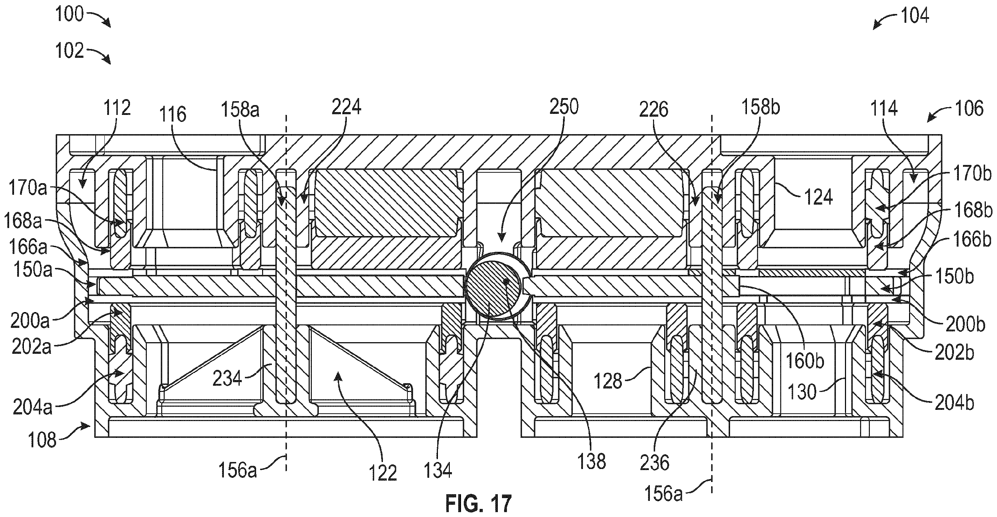

In general, the first seal assembly 152a is sealed between the first louver plate 150a and the first housing section 106 and defines one or more fluid channels or fluid passageways, each extending between the first louver plate 150a and one of the first housing port 116, the second housing port 118, and the third housing port 120. With specific reference to FIGS. 2, 5, and 6, in the exemplary embodiment, the first seal assembly 152a includes a first static seal plate 166a, a first seal plate 168a, and a first static seal 170a. When the first louver plate assembly 112 is assembled, the first static seal plate 166a is in engagement with and sealed against the upper or first louver surface 162a of the first louver plate 150a (see, e.g., FIG. 17). The first seal plate 168a is arranged between the first static seal plate 166a and the first static seal 170a (e.g., in a direction along the first central axis 156a), and is sealed against both the first static seal plate 166a and the first static seal 170a.

The first static seal 170a forms a seal between the first housing section 106 and the first seal plate 168a. In some embodiments, the first static seal 170a is fabricated from an elastomer material. In the exemplary embodiment, the first static seal 170a is compressed between the first housing section 106 and the first seal plate 168a, so that the first static seal 170a provides a biasing force on the first seal plate 168a and the first static seal plate 166a in a direction toward the first louver plate 150a, which aids in maintaining a seal between the first louver plate 150a and the first housing section 106.

In general, each of the first static seal plate 166a, the first seal plate 168a, and the first static seal 170a include similar features that are arranged in the same rotational orientation about the first central axis 156a, which aid in defining one or more of the sealed fluid channels or passageways between the first louver plate 150a and the first housing section 106. Specifically, each of the first static seal plate 166a, the first seal plate 168a, and the first static seal 170a includes a first outer wall 172a, a first inner wall 174a, a first central hub 176a, and a plurality of partitions, walls, or dividers, shown as first inner walls 178a. Each of the first inner walls 178a extends radially (e.g., relative to the first central axis 156a) between the first inner wall 174a and the first central hub 176a.

In general, a number of the first inner walls 178a within the first seal assembly 152a defines the number of sealed fluid channels or passageways formed within the first seal assembly 152a (e.g., one or less of the inner walls defines one fluid passageway, two of the inner walls defines two fluid passageways, three of the inner walls defines three fluid passageways, etc.). In the exemplary embodiment, the first seal assembly 152a includes three of the first inner walls 178a, which divides the flow area between the first louver plate 150a and the first housing section 106 into a first fluid passageway 180a, a second fluid passageway 182a, and a third fluid passageway 184a. The first fluid passageway 180a extends between the first louver plate 150a and the first housing port 116, the second fluid passageway 182a extends between the first louver plate 150a and the second housing port 118, and the third fluid passageway 184a extends between the first louver plate 150a and the third housing port 120. In some embodiments, the first seal assembly 152a may include more or less than three of the first inner walls 178a to define more or less than three fluid passageways to accommodate a particular porting configuration in the first housing section 106.

In the exemplary embodiment, each of the first inner walls 178a is rotationally or circumferentially spaced from one another. The circumferential spacing between adjacent pairs of the first inner walls 178a defines circumferential length of each of the first fluid passageway 180a, the second fluid passageway 182a, and the third fluid passageway 184a (e.g., a rotational angle about the first central axis 156a over which the louver cutout 160a may travel to allow fluid flow through the respective passageways formed in the first seal assembly 152a). In some embodiments, the circumferential length of two or more the first fluid passageway 180a, the second fluid passageway 182a, and the third fluid passageway 184a may be different. For example, a circumferential length 186a of the first fluid passageway 180a may be different than a circumferential length 188a of the second fluid passageway 182a and/or different than a circumferential length 190a of the third fluid passageway 184a. In some embodiments, the circumferential length of two or more of the first fluid passageway 180a, the second fluid passageway 182a, and the third fluid passageway 184a may approximately equal. For example, the circumferential length 188a of the second fluid passageway 182a may be approximately equal to the circumferential length 190a of the third fluid passageway 184a.

In the exemplary embodiment, the first static seal plate 166a and the first seal plate 168a may include one more anti-rotation features that rotationally fix the first static seal plate 166a and the first seal plate 168a relative to the housing assembly 102 (i.e., prevent the first static seal plate 166a and the first seal plate 168a from rotating relative to the housing assembly 102). For example, the first static seal plate 166a includes a lip 192a that protrudes outwardly from the first outer wall 172a of the first static seal plate 166a. In general, the lip 192a interrupts the round or circular shape of the first outer wall 172a of the first static seal plate 166a, and includes a pair of anti-rotation surfaces 194a arranged at opposing edges of the lip 192a. The first static seal plate 166a also includes a recess or notch 196a formed in the lip 192a between the anti-rotation surfaces 194a.

The first seal plate 168a includes a plurality of tabs 198a that extend outwardly from the first outer wall 172a of the first seal plate 168a. One of the plurality of tabs 198a is received within the notch 196a of the first static seal plate 166a, which aids in preventing relative rotation between the first static seal plate 166a and the first seal plate 168a. As described herein, the plurality of tabs 198a and/or the anti-rotation surfaces 194a may engage a structure within the housing assembly 102 to prevent relative rotation between the housing assembly 102 and both the first static seal plate 166a and the first seal plate 168a.

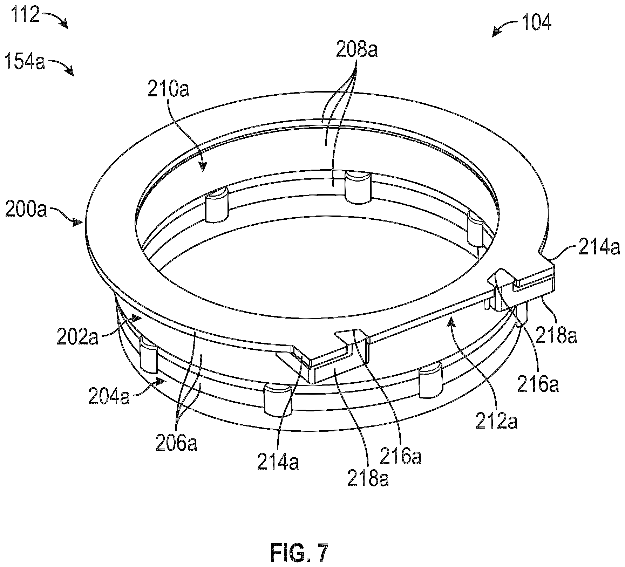

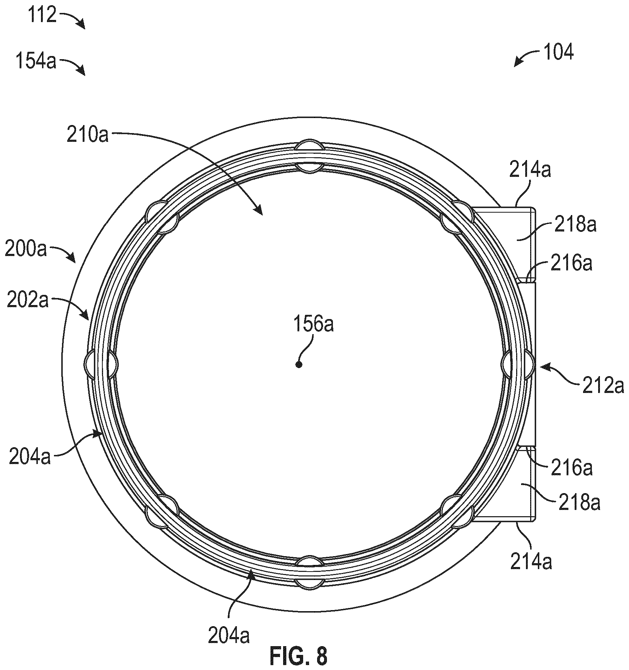

In general, the second seal assembly 154a is sealed between the first louver plate 150a and the second housing section 108 and defines one or more fluid channels or fluid passageways, each extending between the first louver plate 150a and the fourth housing port 122. With specific reference to FIGS. 2, 7, and 8, in the exemplary embodiment, the second seal assembly 154a includes a second static seal plate 200a, a second seal plate 202a, and a second static seal 204a. When the first louver plate assembly 112 is assembled, the second static seal plate 200a is in engagement with and sealed against the lower or second louver surface 164a of the first louver plate 150a (see, e.g., FIG. 17). The second seal plate 202a is arranged between the second static seal plate 200a and the second static seal 204a (e.g., in a direction along the first central axis 156a), and is sealed against both the second static seal plate 200a and the second static seal 204a.

The second static seal 204a forms a seal between the second housing section 108 and the second seal plate 202a. In some embodiments, the second static seal 204a is fabricated from an elastomer material. In the exemplary embodiment, the second static seal 204a is compressed between the second housing section 108 and the second seal plate 202a, so that the second static seal 204a provides a biasing force on the second seal plate 202a and the second static seal plate 200a in a direction toward the first louver plate 150a, which aids in maintaining a seal between the first louver plate 150a and the second housing section 108.

In general, each of the second static seal plate 200a, the second seal plate 202a, and the second static seal 204a include similar features that are arranged in the same rotational orientation about the first central axis 156a, which aid in defining one or more of the sealed fluid channels or passageways between the first louver plate 150a and the second housing section 108. Specifically, each of the second static seal plate 200a, the second seal plate 202a, and the second static seal 204a includes a second outer wall 206a and a second inner wall 208a. Each of the second static seal plate 200a, the second seal plate 202a, and the second static seal 204a define a generally annular shape that does not include includes any partitions, walls, or dividers that extend through the center of the annular shape (e.g., extends from the second inner wall 208a to divide the interior of the annular shape). As such, the second seal assembly 154a defines a single fluid passageway (e.g., a fourth fluid passageway 210a within the first louver plate assembly 112). The fourth fluid passageway 210a extends between the first louver plate 150a and the fourth housing port 122. In some embodiments, the second seal assembly 154a may define more than one fluid passageway (e.g., by including a particular number of internal partitions, walls, or dividers) to accommodate a particular porting configuration in the second housing section 108.

In the exemplary embodiment, the second static seal plate 200a and the second seal plate 202a may include one more anti-rotation features that rotationally fix the second static seal plate 200a and the second seal plate 202a relative to the housing assembly 102 (i.e., prevent the second static seal plate 200a and the second seal plate 202a from rotating relative to the housing assembly 102). For example, the second static seal plate 200a includes a lip 212a that protrudes outwardly from the second outer wall 206a of the second static seal plate 200a. In general, the lip 212a interrupts the round or circular shape of the second outer wall 206a of the second static seal plate 200a, and includes a pair of anti-rotation surfaces 214a arranged at opposing edges of the lip 212a. The second static seal plate 200a also includes a pair of recesses or notches 216a formed in the lip 212a between the anti-rotation surfaces 214a.

The second seal plate 202a includes a plurality of tabs 218a that extend outwardly from the second outer wall 206a of the second seal plate 202a. Each of the plurality of tabs 218a is received within a corresponding one of the notches 216a of the second static seal plate 200a, which aids in preventing relative rotation between the second static seal plate 200a and the second seal plate 202a. As described herein, the plurality of tabs 218a and/or the anti-rotation surfaces 214a may engage a structure within the housing assembly 102 to prevent relative rotation between the housing assembly 102 and both the second static seal plate 200a and the second seal plate 202a.

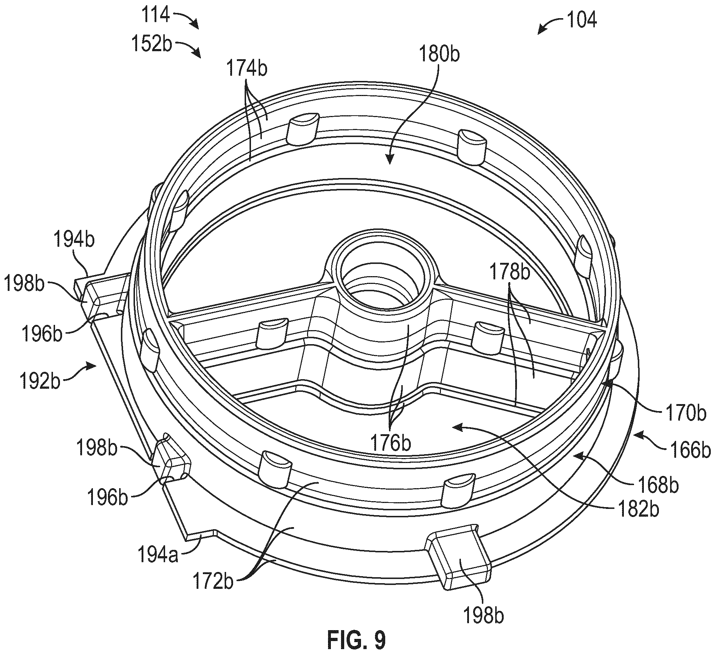

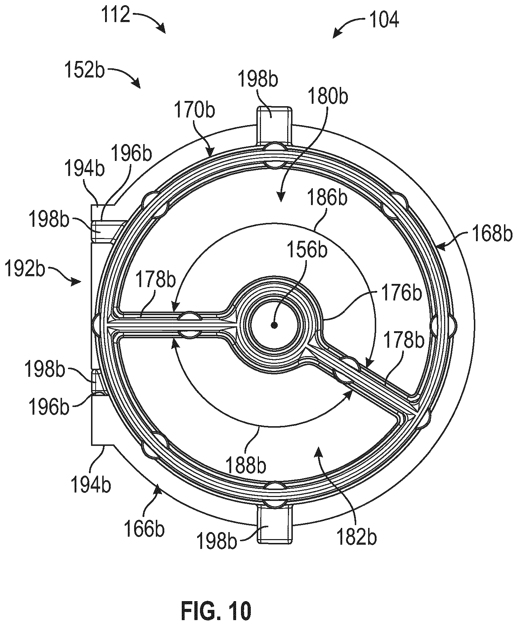

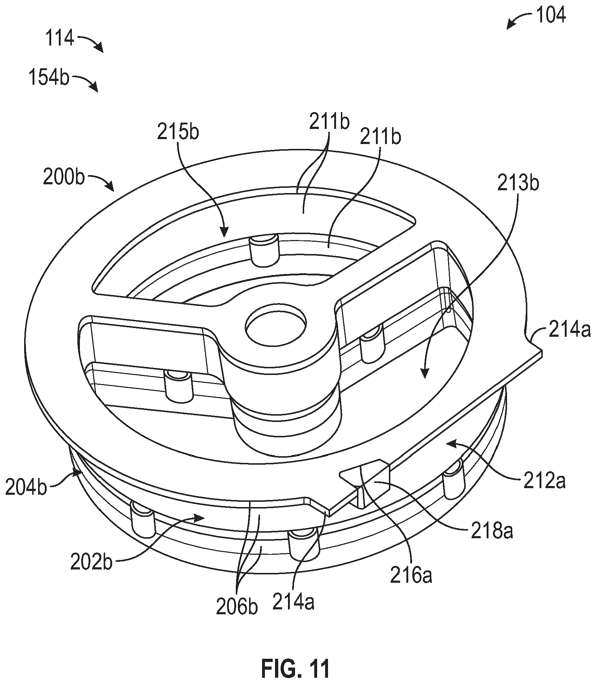

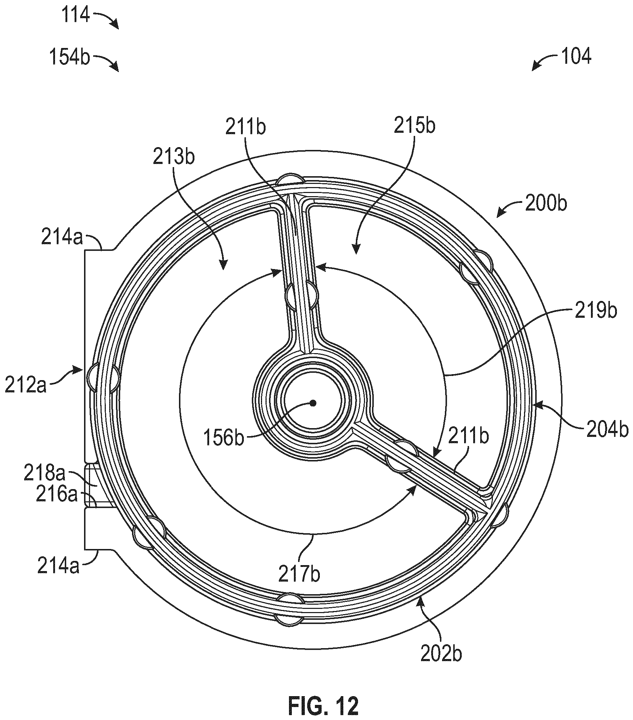

With reference to FIGS. 2 and 9-12, in the exemplary embodiment, the second louver plate assembly 114 includes a second louver plate 150b, a first seal assembly 152b (e.g., an upper seal assembly from the perspective of FIG. 2), and a second seal assembly 154b (e.g., a lower seal assembly from the perspective of FIG. 2). The second louver plate assembly 114 is arranged along a second central axis 156b, which is defined along a central rod or pin 158b. The first or upper seal assembly 152b is arranged between the second louver plate 150b and the first housing section 106 (e.g., in a direction along the second central axis 156b), and the second seal assembly 154b is arranged between the first louver plate 150a and the second housing section 108. In other words, the first seal assembly 152b and the second seal assembly 154b are arranged on opposing sides of the second louver plate 150b.

The second louver plate 150b defines a generally circular or round shape and includes a plurality of gear teeth arranged around an outer perimeter of the second louver plate 150b. A cutout, aperture, hole, slot, shown as louver cutout 160b extends through the second louver plate 150b. Specifically, the louver cutout 160b extends through both an upper or first louver surface 162b and a lower or second louver surface 164b. In the exemplary embodiment, the louver cutout 160b defines a generally triangular shape, with two straight edges and one convex or rounded edge. In some embodiments, the louver cutout 160b may be shaped differently (e.g., round, circular, rectangular, or another shape) to provide the appropriate connections between the sealed fluid channels or fluid passageways formed within the second louver plate assembly 114.

In general, the first seal assembly 152b is sealed between the second louver plate 150b and the first housing section 106 and defines one or more fluid channels or fluid passageways, each extending between the second louver plate 150b and one of the fifth housing port 124 and the sixth housing port 126. With specific reference to FIGS. 2, 9, and 10, in the exemplary embodiment, the first seal assembly 152b includes a first static seal plate 166b, a first seal plate 168b, and a first static seal 170b. When the second louver plate assembly 114 is assembled, the first static seal plate 166b is in engagement with and sealed against the upper or first louver surface 162b of the second louver plate 150b (see, e.g., FIG. 17). The first seal plate 168b is arranged between the first static seal plate 166b and the first static seal 170b (e.g., in a direction along the second central axis 156b), and is sealed against both the first static seal plate 166b and the first static seal 170b.

The first static seal 170b forms a seal between the first housing section 106 and the first seal plate 168b. In some embodiments, the first static seal 170b is fabricated from an elastomer material. In the exemplary embodiment, the first static seal 170b is compressed between the first housing section 106 and the first seal plate 168b, so that the first static seal 170b provides a biasing force on the first seal plate 168b and the first static seal plate 166b in a direction toward the second louver plate 150b, which aids in maintaining a seal between the second louver plate 150b and the first housing section 106.

In general, each of the first static seal plate 166b, the first seal plate 168b, and the first static seal 170b include similar features that are arranged in the same rotational orientation about the second central axis 156b, which aid in defining one or more of the sealed fluid channels or passageways between the second louver plate 150b and the first housing section 106. Specifically, each of the first static seal plate 166b, the first seal plate 168b, and the first static seal 170b includes a first outer wall 172b, a first inner wall 174b, a first central hub 176b, and a plurality of partitions, walls, or dividers, shown as first inner walls 178b. Each of the first inner walls 178b extends radially (e.g., relative to the second central axis 156b) between the first inner wall 174b and the first central hub 176b.

In general, a number of the first inner walls 178b within the first seal assembly 152b defines the number of sealed fluid channels or passageways formed within the first seal assembly 152b (e.g., one or less of the inner walls defines one fluid passageway, two of the inner walls defines two fluid passageways, three of the inner walls defines three fluid passageways, etc.). In the exemplary embodiment, the first seal assembly 152b includes two of the first inner walls 178b, which divides the flow area between the second louver plate 150b and the first housing section 106 into a first fluid passageway 180b and a second fluid passageway 182b. The first fluid passageway 180b extends between the second louver plate 150b and the fifth housing port 124, and the second fluid passageway 182b extends between the second louver plate 150b and the sixth housing port 126. In some embodiments, the first seal assembly 152b may include more or less than two of the first inner walls 178b to define more or less than two fluid passageways to accommodate a particular porting configuration in the first housing section 106.

In the exemplary embodiment, each of the first inner walls 178b is rotationally or circumferentially spaced from one another. The circumferential spacing between adjacent pairs of the first inner walls 178b defines circumferential length of each of the first fluid passageway 180b and the second fluid passageway 182b (e.g., a rotational angle about the second central axis 156b over which the louver cutout 160b may travel to allow fluid flow through the respective passageways formed in the first seal assembly 152b). In the exemplary embodiment, a circumferential length 186b of the first fluid passageway 180b may be different than a circumferential length 188b of the second fluid passageway 182b. In some embodiments, the circumferential length 186b of the first fluid passageway 180b may be approximately equal to the circumferential length 188b of the second fluid passageway 182b.

In the exemplary embodiment, the first static seal plate 166b and the first seal plate 168b may include one more anti-rotation features that rotationally fix the first static seal plate 166b and the first seal plate 168b relative to the housing assembly 102 (i.e., prevent the first static seal plate 166b and the first seal plate 168b from rotating relative to the housing assembly 102). For example, the first static seal plate 166b includes a lip 192b that protrudes outwardly from the first outer wall 172b of the first static seal plate 166b. In general, the lip 192b interrupts the round or circular shape of the first outer wall 172b of the first static seal plate 166b, and includes a pair of anti-rotation surfaces 194b arranged at opposing edges of the lip 192b. The first static seal plate 166b also includes a pair of recesses or notches 196b formed in the lip 192b between the anti-rotation surfaces 194b.

The first seal plate 168b includes a plurality of tabs 198b that extend outwardly from the first outer wall 172b of the first seal plate 168b. Each of the notches 196b receives one of the plurality of tabs 198b, which aids in preventing relative rotation between the first static seal plate 166b and the first seal plate 168b. As described herein, the plurality of tabs 198b and/or the anti-rotation surfaces 194b may engage a structure within the housing assembly 102 to prevent relative rotation between the housing assembly 102 and both the first static seal plate 166b and the first seal plate 168b.

In general, the second seal assembly 154b is sealed between the second louver plate 150b and the second housing section 108 and defines one or more fluid channels or fluid passageways, each extending between the second louver plate 150b and one or more of the seventh housing port 128 and the eighth housing port 130. With specific reference to FIGS. 2, 11, and 12, in the exemplary embodiment, the second seal assembly 154b includes a second static seal plate 200b, a second seal plate 202b, and a second static seal 204b. When the second louver plate assembly 114 is assembled, the second static seal plate 200b is in engagement with and sealed against the lower or second louver surface 164b of the second louver plate 150b (see, e.g., FIG. 17). The second seal plate 202b is arranged between the second static seal plate 200b and the second static seal 204b (e.g., in a direction along the second central axis 156b), and is sealed against both the second static seal plate 200b and the second static seal 204b.

The second static seal 204b forms a seal between the second housing section 108 and the second seal plate 202b. In some embodiments, the second static seal 204b is fabricated from an elastomer material. In the exemplary embodiment, the second static seal 204b is compressed between the second housing section 108 and the second seal plate 202b, so that the second static seal 204b provides a biasing force on the second seal plate 202b and the second static seal plate 200b in a direction toward the second louver plate 150b, which aids in maintaining a seal between the second louver plate 150b and the second housing section 108.

In general, each of the second static seal plate 200b, the second seal plate 202b, and the second static seal 204b include similar features that are arranged in the same rotational orientation about the second central axis 156b, which aid in defining one or more of the sealed fluid channels or passageways between the second louver plate 150b and the second housing section 108. Specifically, each of the second static seal plate 200b, the second seal plate 202b, and the second static seal 204b includes a second outer wall 206b, a second inner wall 208b, a second central hub 209b, and a plurality of partitions, walls, or dividers, shown as second inner walls 211b. Each of the second inner walls 211b extends radially (e.g., relative to the second central axis 156b) between the second inner wall 208b and the second central hub 209b.

In general, a number of the second inner walls 211b within the second seal assembly 154b defines the number of sealed fluid channels or passageways formed within the second seal assembly 154b (e.g., one or less of the inner walls defines one fluid passageway, two of the inner walls defines two fluid passageways, three of the inner walls defines three fluid passageways, etc.). In the exemplary embodiment, the second seal assembly 154b includes two of the second inner walls 211b, which divides the flow area between the second louver plate 150b and the second housing section 108 into a third passageway 213b and a fourth fluid passageway 215b. The third passageway 213b extends between the second louver plate 150b and the seventh housing port 128, and the fourth fluid passageway 215b extends between the second louver plate 150b and the eighth housing port 130. In some embodiments, the second seal assembly 154b may include more or less than two of the second inner walls 211b to define more or less than two fluid passageways to accommodate a particular porting configuration in the second housing section 108.

In the exemplary embodiment, each of the second inner walls 211b is rotationally or circumferentially spaced from one another. The circumferential spacing between adjacent pairs of the first inner walls second inner walls 211b defines circumferential length of each of the third passageway 213b and the fourth fluid passageway 215b (e.g., a rotational angle about the second central axis 156b over which the louver cutout 160b may travel to allow fluid flow through the respective passageways formed in the second seal assembly 154b). In the exemplary embodiment, a circumferential length 217b of the third passageway 213b may be different than a circumferential length 219b of the fourth fluid passageway 215b. In some embodiments, the circumferential length 217b of the third passageway 213b may be approximately equal to the circumferential length 219b of the fourth fluid passageway 215b.

In the exemplary embodiment, the first seal assembly 152b defines a different rotational orientation about the second central axis 156b than the second seal assembly 154b (see, e.g., FIG. 2), which allows different porting connections between the first housing section 106 and the second housing section 108. For example, the rotational orientation (e.g., circumferential position) of each of the first inner walls 178b is different that the rotational orientation (e.g., circumferential position) of each of the second inner walls 211b. In this way, for example, the second louver plate assembly 114 is able to provide or inhibit fluid communication between different porting connections and arrangements on the first housing section 106 and the second housing section 108. Additionally, the two passageways formed in each of the first seal assembly 152b and the second seal assembly 154b may be partitioned, via the louver cutout 160b, to provide more than two fluid flow paths through the second louver plate assembly 114. In some embodiments, the first seal assembly 152b may define approximately the same rotational orientation as the second seal assembly 154b, depending on the particular porting arrangement and thermal management application.

In the exemplary embodiment, the second static seal plate 200b and the second seal plate 202b may include one more anti-rotation features that rotationally fix the second static seal plate 200b and the second seal plate 202b relative to the housing assembly 102 (i.e., prevent the second static seal plate 200b and the second seal plate 202b from rotating relative to the housing assembly 102). For example, the second static seal plate 200b includes a lip 212b that protrudes outwardly from the second outer wall 206b of the second static seal plate 200b. In general, the lip 212b interrupts the round or circular shape of the second outer wall 206b of the second static seal plate 200b, and includes a pair of anti-rotation surfaces 214b arranged at opposing edges of the lip 212b. The second static seal plate 200b also includes a recess or notch 216b formed in the lip 212b between the anti-rotation surfaces 214b.

The second seal plate 202b includes a tab 218b that extends outwardly from the second outer wall 206b of the second seal plate 202b. The tab 218b is received within the notch 216b of the second static seal plate 200b, which aids in preventing relative rotation between the second static seal plate 200b and the second seal plate 202b. As described herein, the tab 218b and/or the anti-rotation surfaces 214b may engage a structure within the housing assembly 102 to prevent relative rotation between the housing assembly 102 and both the second static seal plate 200b and the second seal plate 202b.

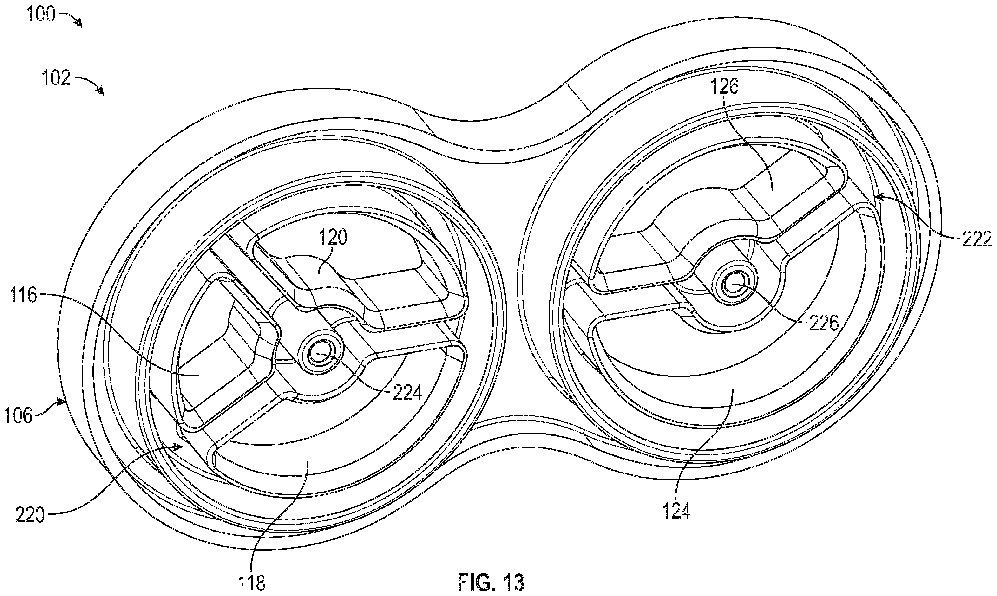

Turning to FIGS. 13-17, the shape and number of passageways within first louver plate assembly 112 and the second louver plate assembly 114 generally conforms to the number, shape, and arrangement of the ports within the housing assembly 102. The first louver plate assembly 112 is sealed between the first housing section 106 and the first louver plate 150a, and between the second housing section 108 and the first louver plate 150a. As shown in FIG. 13, the first housing section 106 includes a recess 220 for the first seal assembly 152a that is dimensioned to at least partially receive the first static seal 170a therein and a recess 222 for the first seal assembly 152b that is dimensioned to at least partially receive the first static seal 170b therein. In general, the internal walls that form the recess 220 conform to the shape and profile of the first static seal 170b so that the first static seal 170b may be pressed into the recess 220 during assembly of the thermal management control valve 100. In some embodiments, the first static seal 170b may be a press-in-place seal. A central bore 224 is arranged at an axial center (e.g., along the first central axis 156a) of the recess 220 and extends axially in a direction toward the first louver plate 150a. When assembled, the central bore 224 receives an end of the pin 158a (see, e.g., FIG. 17), which extends through an axial center of the first louver plate 150a.

The internal walls that form the recess 222 conform to the shape and profile of the first static seal 170b so that the first static seal 170b may be pressed into the recess 222 during assembly of the thermal management control valve 100. In some embodiments, the first static seal 170b may be a press-in-place seal. A central bore 226 is arranged at an axial center (e.g., along the second central axis 156b) of the recess 222 and extends axially in a direction toward the second louver plate 150b. When assembled, the central bore 226 receives an end of the pin 158b (see, e.g., FIG. 17), which extends through an axial center of the second louver plate 150b.

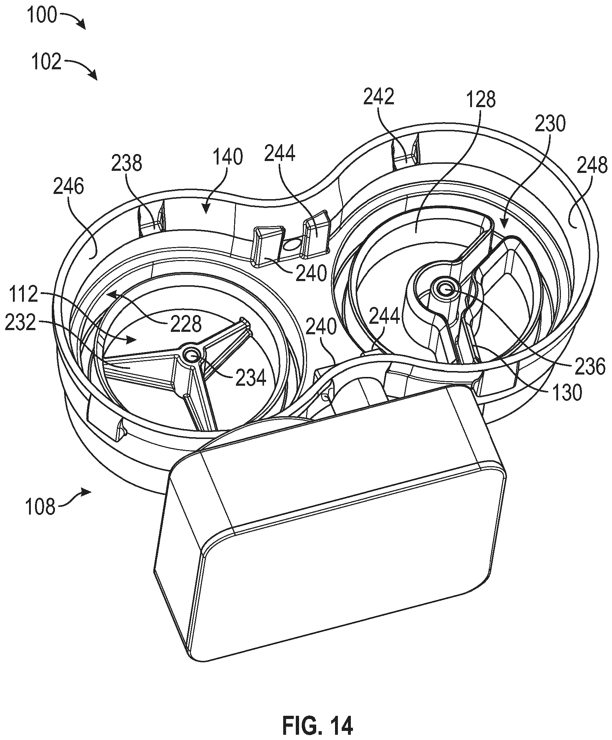

As shown in FIG. 14, the second housing section 108 includes a recess 228 for the second seal assembly 154a that is dimensioned to at least partially receive the second static seal 204a therein and a recess 230 for the second seal assembly 154b that is dimensioned to at least partially receive the second static seal 204b therein. In general, the internal walls that form the recess 228 conform to the shape and profile of the second static seal 204a so that the second static seal 204a may be pressed into the recess 228 during assembly of the thermal management control valve 100. In some embodiments, the second static seal 204a may be a press-in-place seal. In the exemplary embodiment, the recess 228 defines a generally annular shape, like the second static seal 204a, and a plurality of support arms 232 extend between an internal wall of the fourth housing port 122 and a central bore 234. The central bore 234 is arranged at an axial center (e.g., along the first central axis 156a) of the fourth housing port 122. The central bore 234 extends axially in a direction toward the first louver plate 150a and, when the thermal management control valve 100 is assembled, the central bore 234 receives an end of the pin 158a (see, e.g., FIG. 17).

The internal walls that form the recess 230 conform to the shape and profile of the second static seal 204b so that the second static seal 204b may be pressed into the recess 230 during assembly of the thermal management control valve 100. In some embodiments, the second static seal 204b may be a press-in-place seal. A central bore 236 is arranged at an axial center (e.g., along the second central axis 156b) of the recess 230 and extends axially in a direction toward the second louver plate 150b. When assembled, the central bore 236 receives an end of the pin 158b (see, e.g., FIG. 17).

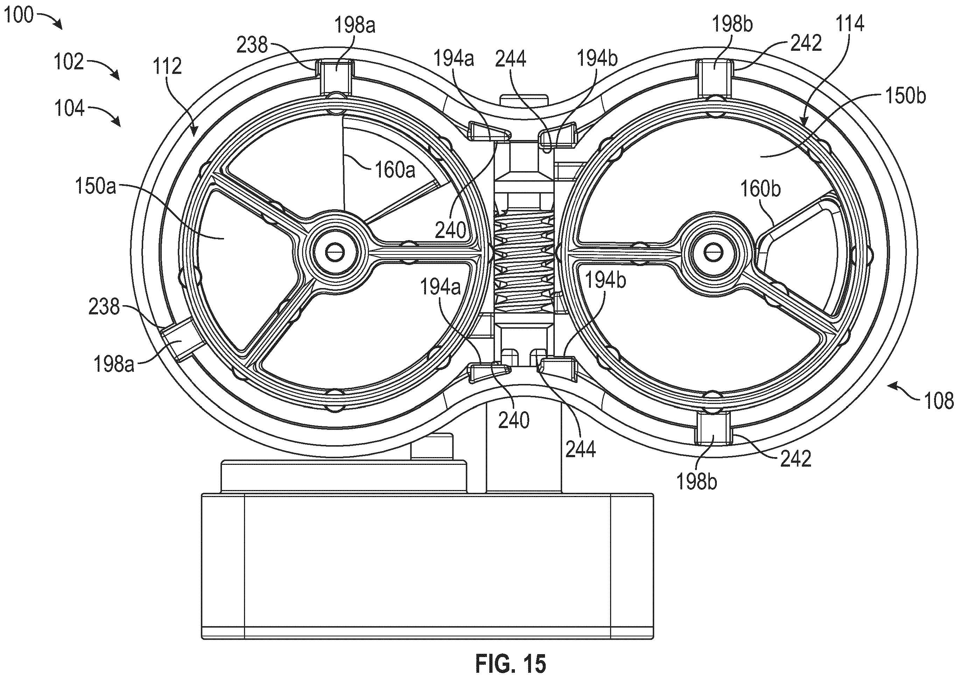

With reference to FIGS. 14-16, the second housing section 108 includes one or more features that aid in preventing the first seal assembly 152a, the first seal assembly 152b, the second seal assembly 154a, and the second seal assembly 154b from rotating relative to the housing assembly 102 (and specifically relative to the second housing section 108). Specifically, the second housing section 108 includes a plurality of first tab recesses 238, a plurality of first stop surfaces 240, a plurality of second tab recesses 242, and a plurality of second stop surface 244. The plurality of first tab recesses 238 are each recessed into an internal wall 246 of the second housing section 108. The plurality of first tab recesses 238 are rotationally spaced from one another (e.g., about the first central axis 156a) along the internal wall 246. When the thermal management control valve 100 is assembled, each of the plurality of first tab recesses 238 receives a corresponding one of the plurality of tabs 198a of the first seal plate 168a (see, e.g., FIG. 15). The interface between the plurality of first tab recesses 238 and the plurality of tabs 198a aids in limiting or preventing relative rotation between the first seal plate 168a and the second housing section 108. In the exemplary embodiment, two of the plurality of tabs 198a are received within the plurality of first tab recesses 238, and one of the plurality of tabs 198a is at least partially received within the notch 196a of the first static seal plate 166a. In some embodiments, the first seal plate 168a may include more or less than three of the plurality of tabs 198a arranged in varying orientations, and a corresponding number of both the notches 196a in the first static seal plate 166a and the plurality of first tab recesses 238 in the second housing section 108.

The plurality of first stop surfaces 240 are each arranged within the louver manifold 140 and are generally opposed to one another. In this way, for example, the plurality of first stop surfaces 240 provide rotational stops for both rotational directions that the first louver plate 150a may be rotated. When the thermal management control valve 100 is assembled, each of the anti-rotation surfaces 194a of the first static seal plate 166a abuts a corresponding one of the plurality of first stop surfaces 240 (see, e.g., FIG. 15), which limits or prevents relative rotation between the first static seal plate 166a and the second housing section 108. Accordingly, the first static seal plate 166a and the first seal plate 168a both include anti-rotation features that interface with the second housing section 108, and with one another, to prevent or limit rotation relative to the second housing section 108.

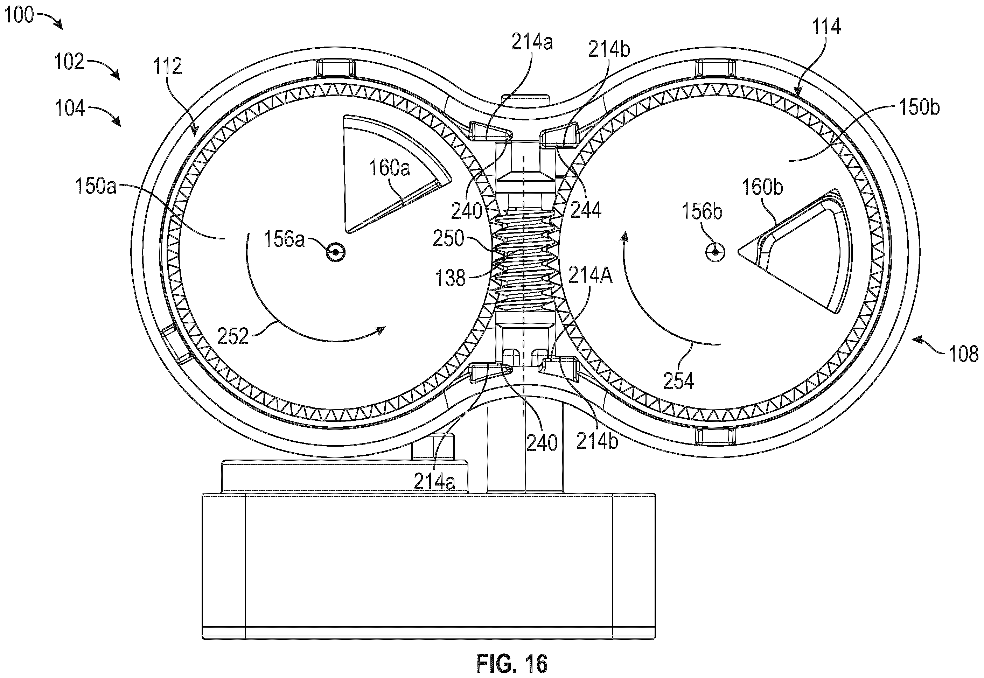

For the second seal assembly 154a, each of the anti-rotation surfaces 214a of the second static seal plate 200a abuts a corresponding one of the plurality of first stop surfaces 240 (see, e.g., FIG. 16), which limits or prevents relative rotation between the second static seal plate 200a and the second housing section 108. In the exemplary embodiment, the plurality of tabs 218a of the second seal plate 202a are at least partially received within the notches 216a formed in the second static seal plate 200a, which limits or prevents relative rotation between the second static seal plate 200a and the second seal plate 202a and, thereby, between the second seal plate 202a and the second housing section 108. In some embodiments, the outer edges or surfaces of the plurality of tabs 218a also abut a corresponding one of the plurality of first stop surfaces 240 to further limit or prevent relative rotation between the second seal plate 202a and the second housing section 108. Accordingly, the second static seal plate 200a and the second seal plate 202a both include anti-rotation features that interface with the second housing section 108, and with one another, to prevent or limit rotation relative to the second housing section 108.

For the first seal assembly 152b, the plurality of second tab recesses 242 are each recessed into an internal wall 248 of the second housing section 108. The plurality of second tab recesses 242 are rotationally spaced from one another (e.g., about the second central axis 156b) along the internal wall 248. When the thermal management control valve 100 is assembled, each of the plurality of second tab recesses 242 receives a corresponding one of the plurality of tabs 198b of the first seal plate 168b (see, e.g., FIG. 15). The interface between the plurality of second tab recesses 242 and the plurality of tabs 198b aids in limiting or preventing relative rotation between the first seal plate 168b and the second housing section 108. In the exemplary embodiment, two of the plurality of tabs 198b are received within the plurality of second tab recesses 242, and two of the plurality of tabs 198b are least partially received within the notches 196b of the first static seal plate 166b. In some embodiments, the first seal plate 168b may include more or less and four of the plurality of tabs 198b arranged in varying orientations, and a corresponding number of both the notches 196b in the first static seal plate 166b and the plurality of second tab recesses 242 in the second housing section 108.

The plurality of second stop surface 244 are each arranged within the louver manifold 140 and are generally opposed to one another. In this way, for example, the plurality of second stop surface 244 provide rotational stops for both rotational directions that the first louver plate 150a may be rotated. When the thermal management control valve 100 is assembled, each of the anti-rotation surfaces 194b of the first static seal plate 166b abuts a corresponding one of the plurality of second stop surface 244 (see, e.g., FIG. 15), which limits or prevents relative rotation between the first static seal plate 166b and the second housing section 108. Accordingly, the first static seal plate 166b and the first seal plate 168b both include anti-rotation features that interface with the second housing section 108, and with one another, to prevent or limit rotation relative to the second housing section 108.

For the second seal assembly 154b, each of the anti-rotation surfaces 214b of the second static seal plate 200b abuts a corresponding one of the plurality of second stop surface 244 (see, e.g., FIG. 16), which limits or prevents relative rotation between the second static seal plate 200b and the second housing section 108. In the exemplary embodiment, the tab 218b of the second seal plate 202a is at least partially received within the notch 216b formed in the second static seal plate 200b, which limits or prevents relative rotation between the second static seal plate 200b and the second seal plate 202b and, thereby, between the second seal plate 202b and the second housing section 108. Accordingly, the second static seal plate 200b and the second seal plate 202b both include anti-rotation features that interface with the second housing section 108, and with one another, to prevent or limit rotation relative to the second housing section 108.

With reference to FIGS. 2 and 15-17, in the exemplary embodiment, the drive shaft 134 includes a threaded portion 250 (e.g., helical external threads) that are threaded with gear teeth formed on the outer periphery of both the first louver plate 150a and the second louver plate 150b (see, e.g., FIG. 16). In this way, for example, selective rotation of the drive shaft 134, via the rotary actuator 132, results in rotation of the first louver plate 150a about the first central axis 156a in a first rotational direction 252, and rotation of the second louver plate 150b about the second central axis 156b in a second rotational direction 254 opposite to the first rotational direction. The selective rotation of the first louver plate 150a and the second louver plate 150b results in rotation of the louver cutout 160a and the louver cutout 160b, respectively, relative to the various fluid passageways formed by the first louver plate assembly 112 and the second louver plate assembly 114. Accordingly, the louver cutout 160a and the louver cutout 160b are selectively rotated to various rotational positions to provide or inhibit fluid communication along the various fluid passageways formed in the first louver plate assembly 112 and the second louver plate assembly 114, and thereby provide or inhibit fluid communication between the ports formed in the housing assembly 102. For example, in the exemplary position of FIG. 17, the first louver plate 150a blocks fluid communication between the first housing port 116 and the fourth housing port 122 (e.g., fluid flow is blocked along the first fluid passageway 180a and the fourth fluid passageway 210a), and the second louver plate 150b provides fluid communication between the fifth housing port 124 and the eighth housing port 130 (e.g., fluid flow is allowed along the first fluid passageway 180b and the fourth fluid passageway 215b). It should be appreciated that the worm drive-like actuation or movement of the first louver plate 150a and the second louver plate 150b driven by the threaded interaction between the drive shaft 134 and both the first louver plate 150a and the second louver plate 150b is but one exemplary embodiment for actuating or rotating the first louver plate 150a and the second louver plate 150b. In some embodiments, the rotary actuator 132 may rotate a spur gear, a cam, or an equivalent mechanism that converts rotational motion to rotational motion to selectively rotate the first louver plate 150a and the second louver plate 150b.

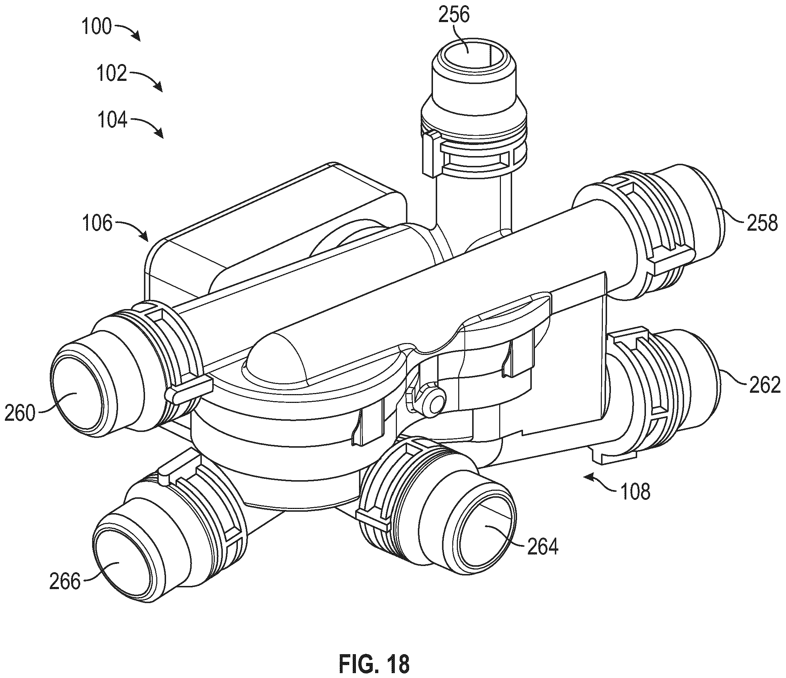

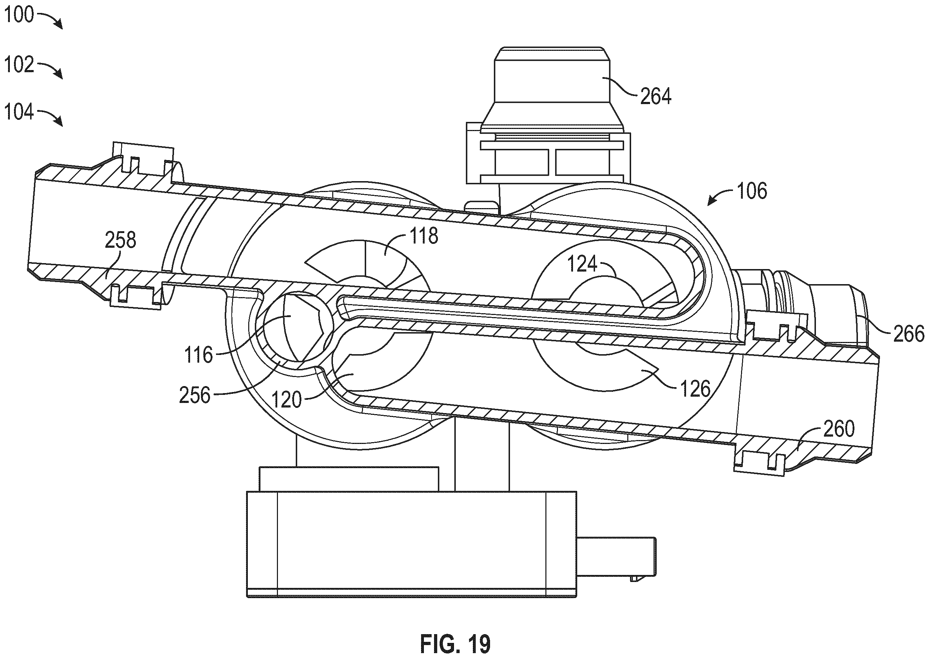

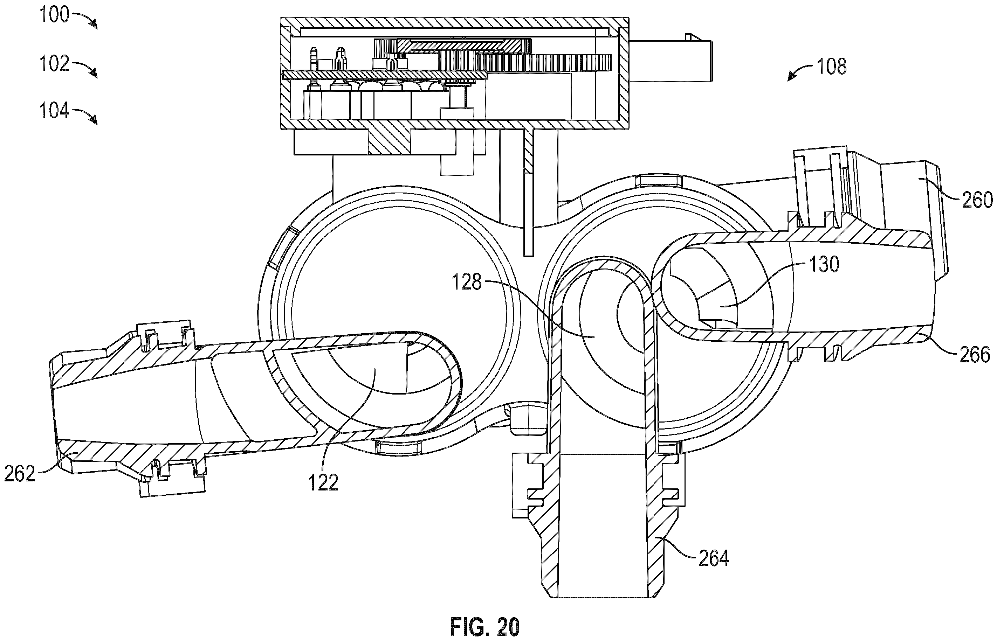

In general, the design and properties of the thermal management control valve 100 including the first louver plate assembly 112 and the second louver plate assembly 114 enables fluid communication to be provided or inhibited between various combination of porting configurations. In addition, the partitioning of the fluid passageways within the first louver plate assembly 112 and the second louver plate assembly 114 and the selective rotation of the first louver plate 150a and second louver plate 150b enables the connections between various ports to be proportionally/incrementally opened and/or closed (e.g., the flow area of a particular flow path proportionally/incrementally increases or decreases). As described herein, the ports of the housing assembly 102 may each be in fluid communication with a connector, fitting, or tubing that delivers fluid flow to or from a thermal management component. FIGS. 18-20 show an exemplary embodiment of the thermal management control valve 100 with the housing assembly 102 including a plurality of connectors or fittings, shown as a plurality of ports, each being in fluid communication with one or more of the first housing port 116, the second housing port 118, the third housing port 120, the fourth housing port 122, the fifth housing port 124, the sixth housing port 126, the seventh housing port 128, and the eighth housing port 130. Specifically, the housing assembly 102 includes a first port 256, a second port 258, a third port 260, a fourth port 262, a fifth port 264, and a sixth port 266. In the exemplary embodiment, the first port 256, the second port 258, and the third port 260 are arranged on the first housing section 106, and the fourth port 262, the fifth port 264, and the sixth port 266 are arranged on the second housing section 108. As shown in FIG. 19, the first port 256 is in fluid communication with the first housing port 116 (and the first fluid passageway 180a), the second port 258 is in fluid communication with both the second housing port 118 and the fifth housing port 124 (e.g., both the second fluid passageway 182a and the first fluid passageway 180b), and the third port 260 is in fluid communication with both the third housing port 120 and the sixth housing port 126 (e.g., both the third fluid passageway 184a and the second fluid passageway 182b). As shown in FIG. 20, the fourth port 262 is in fluid communication with the fourth housing port 122 (and the fourth fluid passageway 210a), the fifth port 264 is in fluid communication with the seventh housing port 128 (and the third passageway 213b), and the sixth port 266 is in fluid communication with the eighth housing port 130 (and the fourth fluid passageway 215b). It should be appreciated that the porting of FIGS. 18-20 (e.g., including six of the ports, with two of the ports being connected to two of the housing ports and the remaining ports each being connected to one of the housing ports) is but one exemplary porting configuration and the housing assembly 102 may be adapted to accommodate alternative porting configurations as needed for particular thermal management application. For example, each of the housing ports may be in fluid communication with a corresponding one fluid port (e.g., the housing assembly 102 may include eight fluid ports). In some embodiments, the housing assembly 102 may include more or less that six fluid ports.

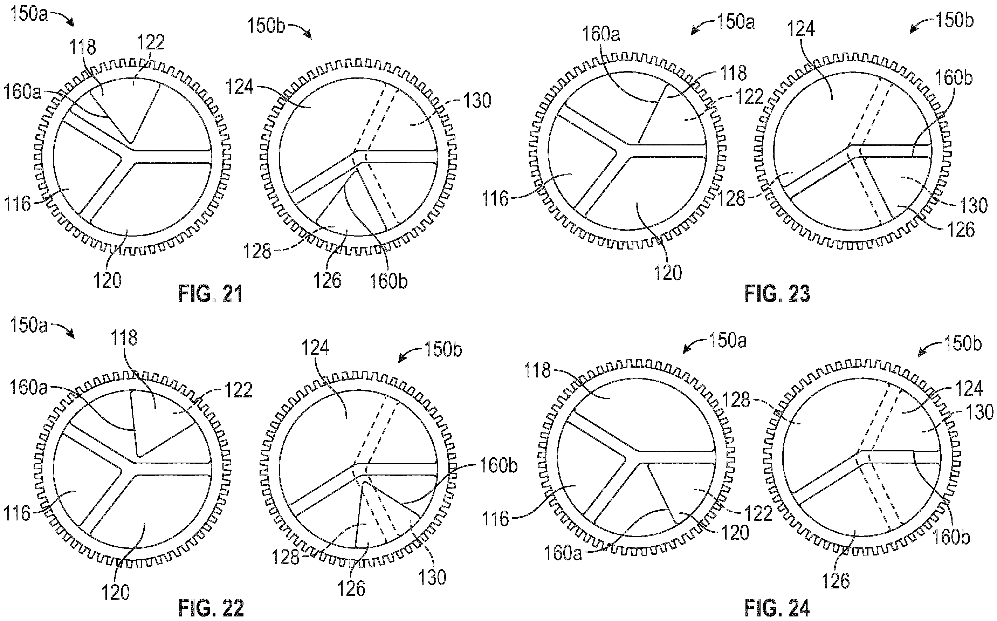

In general, during operation, the first louver plate 150a and the second louver plate 150b are selectively rotatable between a plurality of rotational positions to provide or inhibit fluid communication between one or more of the ports of the housing assembly 102. For example, turning to FIGS. 21-28, the first louver plate assembly 112 and the second louver plate assembly 114 are shown with the first louver plate 150a and the second louver plate 150b in a plurality of rotational positions, each including a particular set of fluid flow paths between the various ports of the housing assembly 102. In FIGS. 21-28, each of the views is from a top of the thermal management control valve 100 and the features of second housing section 108, the second seal assembly 154a, and the second seal assembly 154b (e.g., features below the first louver plate 150a and the second louver plate 150b) are shown in dashed lines. While FIGS. 21-28 illustrate the first louver plate 150a and the second louver plate 150b in specific positions, it should be appreciated that the rotary actuator 132 may selectively move the first louver plate 150a and the second louver plate 150b to any rotary position, including any rotary position between the positions illustrated in FIGS. 21-28.

FIG. 21 shows the flow control assembly 104 in a first operating mode (e.g., with the first louver plate 150a and the second louver plate 150b in a first position). In the first operating mode, the louver cutout 160a rotationally aligns with (e.g., allows/opens fluid flow through) the second housing port 118 (and the second fluid passageway 182a) and the fourth housing port 122 (and the fourth fluid passageway 210a), and fluid communication is provided between the second housing port 118 and the fourth housing port 122 (and between the second port 258 and the fourth port 262). The first louver plate 150a blocks or closes the first housing port 116 and the third housing port 120. In the first operating mode, the louver cutout 160b rotationally aligns with the sixth housing port 126 (e.g., and the second fluid passageway 182b) and the seventh housing port 128 (and the third passageway 213b), and fluid communication is provided between the sixth housing port 126 and the seventh housing port 128 (and between the third port 260 and the fifth port 264). The second louver plate 150b blocks or closes the fifth housing port 124 and the eighth housing port 130.

FIG. 22 shows the flow control assembly 104 in a first intermediate operating mode (e.g., between the first operating mode and a second operating mode, with the first louver plate 150a and the second louver plate 150b in a first intermediate position). In the first intermediate operating mode, the louver cutout 160a rotationally aligns with the second housing port 118 (and the second fluid passageway 182a and the fourth housing port 122 (and the fourth fluid passageway 210a), and fluid communication is provided between the second housing port 118 and the fourth housing port 122 (and between the second port 258 and the fourth port 262). The first louver plate 150a blocks or closes the first housing port 116 and the third housing port 120. In the first intermediate position, the louver cutout 160b rotationally aligns with the sixth housing port 126 (and the second fluid passageway 182b) and both the seventh housing port 128 (and the third passageway 213b) and the eighth housing port 130 (and the fourth fluid passageway 215b). Fluid communication is provided between the sixth housing port 126 and the seventh housing port 128 (and between the third port 260 and the fifth port 264), and between the sixth housing port 126 and the eighth housing port 130 (and between the third port 260 and the sixth port 266). With the louver cutout 160b overlapping with both the seventh housing port 128 and the eighth housing port 130, the flow area is reduced when compared to these ports being fully opened (e.g., any entirety of the louver cutout 160b overlaps with the port) and partial fluid flow (e.g., less than a maximum fluid flow rate) is provided through the seventh housing port 128 and the eighth housing port 130. In the first intermediate position, the second louver plate 150b blocks or closes the fifth housing port 124.

FIG. 23 shows the flow control assembly 104 in a second operating mode (e.g., with the first louver plate 150a and the second louver plate 150b in a second position). In the second operating mode, the louver cutout 160a rotationally aligns with the second housing port 118 (and the second fluid passageway 182a and the fourth housing port 122 (and the fourth fluid passageway 210a), and fluid communication is provided between the second housing port 118 and the fourth housing port 122 (and between the second port 258 and the fourth port 262). The first louver plate 150a blocks or closes the first housing port 116 and the third housing port 120. In the first intermediate position, the louver cutout 160b rotationally aligns with the sixth housing port 126 (and the second fluid passageway 182b) and the eighth housing port 130 (and the fourth fluid passageway 215b), and fluid communication is provided between the sixth housing port 126 and the eighth housing port 130 (and between the third port 260 and the sixth port 266). The second louver plate 150b blocks or closes the fifth housing port 124 and the seventh housing port 128 (and the third passageway 213b).

FIG. 24 shows the in a third operating mode (e.g., with the first louver plate 150a and the second louver plate 150b in a third position). In the third operating mode, the louver cutout 160a rotationally aligns with the third housing port 120 (and the third fluid passageway 184a) and the fourth housing port 122 (and the fourth fluid passageway 210a), and fluid communication is provided between the third housing port 120 and the fourth housing port 122 (and between the third port 260 and the fourth port 262). The first louver plate 150a blocks or closes the first housing port 116 and the second housing port 118. In the third operating mode, the louver cutout 160b rotationally aligns with the fifth housing port 124 (and the first fluid passageway 180b) and the eighth housing port 130 (and the fourth fluid passageway 215b), and fluid communication is provided between the fifth housing port 124 and the eighth housing port 130 (and between the second port 258 and the sixth port 266). The second louver plate 150b blocks or closes the sixth housing port 126 and the seventh housing port 128.

In an exemplary embodiment, the flow control assembly 104 is operable in a second intermediate position (e.g., between the second operating mode and the third operating mode, with the first louver plate 150a and the second louver plate 150b in a second intermediate position). In the second intermediate operating mode, the louver cutout 160a may rotationally align with both the second housing port 118 (and the second fluid passageway 182a) and the third housing port 120 (and the third fluid passageway 184a), and the fourth housing port 122 (and the fourth fluid passageway 210a). Fluid communication (e.g., partial fluid flow) is provided between the second housing port 118 and the fourth housing port 122 (and between the second port 258 and the fourth port 262), and fluid communication (e.g., partial fluid flow) is provided between the third housing port 120 and the fourth housing port 122 (and between the third port 260 and the fourth port 262). The first louver plate 150a may block or close the first housing port 116. In the second intermediate position, the louver cutout 160b may rotationally align with both the fifth housing port 124 (and the first fluid passageway 180b) and the sixth housing port 126 (and the second fluid passageway 182b), and the eighth housing port 130 (and the fourth fluid passageway 215b). Fluid communication (e.g., partial fluid flow) is provided between the fifth housing port 124 and the eighth housing port 130 (and between the second port 258 and the sixth port 266), and fluid communication (e.g., partial fluid flow) is provided between the sixth housing port 126 and the eighth housing port 130 (and between the third port 260 and the sixth port 266). The second louver plate 150b may block or close the seventh housing port 128.

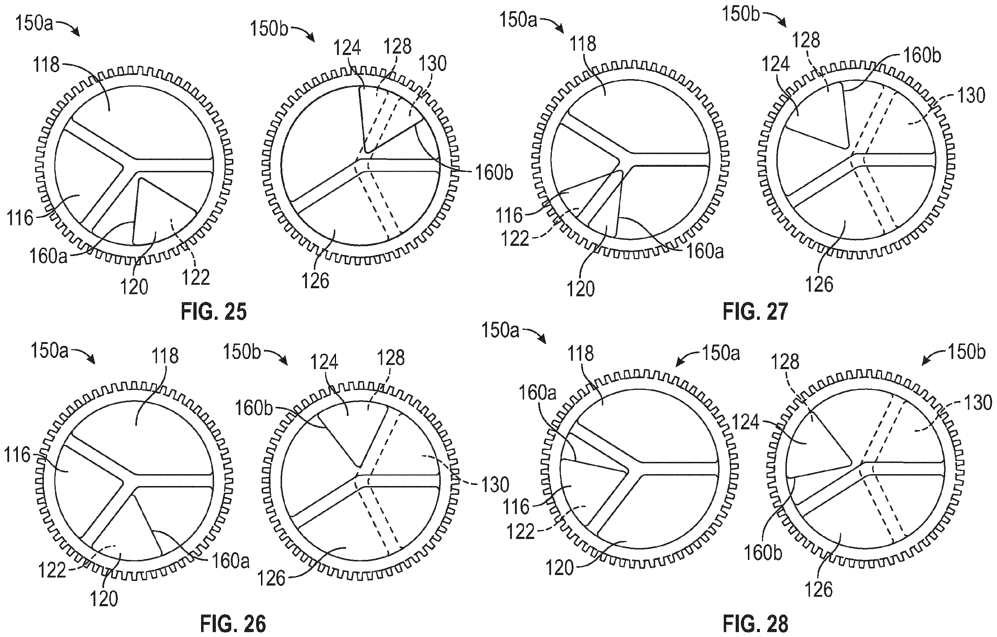

FIG. 25 shows the flow control assembly 104 is operable in a third intermediate position (e.g., between the third operating mode and a fourth operating mode, with the first louver plate 150a and the second louver plate 150b in a third intermediate position). In the third intermediate operating mode, the louver cutout 160a rotationally aligns with the third housing port 120 (and the third fluid passageway 184a) and the fourth housing port 122 (and the fourth fluid passageway 210a), and fluid communication is provided between the third housing port 120 and the fourth housing port 122 (and between the third port 260 and the fourth port 262). The first louver plate 150a blocks or closes the first housing port 116 and the second housing port 118. In the third intermediate position, the louver cutout 160b rotationally aligns with the fifth housing port 124 (and the first fluid passageway 180b) and both the seventh housing port 128 (and the third passageway 213b) and the eighth housing port 130 (and the fourth fluid passageway 215b). Fluid communication (e.g., partial fluid flow) is provided between the fifth housing port 124 and the seventh housing port 128 (and between the second port 258 and the fifth port 264), and fluid communication (e.g., partial fluid flow) is provided between the fifth housing port 124 and the eighth housing port 130 (and between the second port 258 and the sixth port 266). The louver cutout 160b blocks or closes the sixth housing port 126.

FIG. 26 shows the flow control assembly 104 in a fourth operating mode (e.g., with the first louver plate 150a and the second louver plate 150b in a fourth position). In the fourth operating mode, the louver cutout 160a rotationally aligns with the third housing port 120 (and the third fluid passageway 184a) and the fourth housing port 122 (and the fourth fluid passageway 210a), and fluid communication is provided between the third housing port 120 and the fourth housing port 122 (and between the third port 260 and the fourth port 262). The first louver plate 150a blocks or closes the first housing port 116 and the second housing port 118. In the fourth position, the louver cutout 160b rotationally aligns the fifth housing port 124 (and the first fluid passageway 180b) and the seventh housing port 128 (and the third passageway 213b), and fluid communication is provided between the fifth housing port 124 and the seventh housing port 128 (and between the second port 258 and the fifth port 264). The second louver plate 150b blocks or closes the sixth housing port 126 and the eighth housing port 130.

FIG. 27 shows the flow control assembly 104 in a fourth intermediate position (e.g., between the fourth operating mode and fifth fourth operating mode, with the first louver plate 150a and the second louver plate 150b in a fourth intermediate position). In the fourth intermediate operating mode, the louver cutout 160a rotationally aligns with both the first housing port 116 (and the first fluid passageway 180a) and the third housing port 120 (and the third fluid passageway 184a), and the fourth housing port 122. Fluid communication (e.g., partial fluid flow) is provided between the first housing port 116 and the fourth housing port 122 (and between the first port 256 and the fourth port 262), and fluid communication (e.g., partial fluid flow) is provided between the third housing port 120 and the fourth housing port 122 (and between the third port 260 and the fourth port 262). The first louver plate 150a blocks or closes the second housing port 118. In the fourth intermediate position, the louver cutout 160b rotationally aligns with the fifth housing port 124 (and the first fluid passageway 180b) and the seventh housing port 128 (and the third passageway 213b), and fluid communication is provided between the fifth housing port 124 and the seventh housing port 128 (and between the second port 258 and the fifth port 264). The second louver plate 150b blocks or closes the sixth housing port 126 and the eighth housing port 130.

FIG. 28 shows the flow control assembly 104 in a fifth operating mode (e.g., with the first louver plate 150a and the second louver plate 150b in a fifth position). In the fifth operating mode, the louver cutout 160a rotationally aligns with the first housing port 116 (and the first fluid passageway 180a) and the fourth housing port 122 (and the fourth fluid passageway 210a), and fluid communication is provided between the first housing port 116 and the fourth housing port 122 (and between the first port 256 and the fourth port 262). The first louver plate 150a blocks or closes the second housing port 118 and the third housing port 120. In the fifth position, the louver cutout 160b rotationally aligns with the fifth housing port 124 (and the first fluid passageway 180b) and the seventh housing port 128 (and the third passageway 213b), and fluid communication is provided between the fifth housing port 124 and the seventh housing port 128 (and between the second port 258 and the fifth port 264). The second louver plate 150b blocks or closes the sixth housing port 126 and the eighth housing port 130.

As described above, the design and properties of the first louver plate assembly 112 and the second louver plate assembly 114 enable the thermal management control valve 100 to provide various fluid connections between the ports of the housing assembly 102. In some operating modes, both the first louver plate assembly 112 and the second louver plate assembly 114 provide fluid communication between two different ports. In other operating modes, at least one of the first louver plate assembly 112 and the second louver plate assembly 114 provides fluid communication between three different ports. In general, each of the operating modes (or positions of the first louver plate 150a and the second louver plate 150b) defines a unique set of connections between four or more of the housing ports (e.g., between the first housing port 116, the second housing port 118, the third housing port 120, the fourth housing port 122, the fifth housing port 124, the sixth housing port 126, the seventh housing port 128, and the eighth housing port 130) or between four or more of the fluid ports (e.g., the first port 256, the second port 258, the third port 260, the fourth port 262, the fifth port 264, and the sixth port 266). Each individual louver assembly (e.g., the first louver plate assembly 112 or the second louver plate assembly 114) selectively inhibits or provides fluid communication between at least four of the housing ports, depending on the rotations position of the first louver plate 150a or the second louver plate 150b. These operational characteristics of the thermal management control valve 100 enable the thermal management control valve 100 to control fluid flow to various thermal management components using a single valve with a smaller packaging size (e.g., when compared to conventional thermal control valves or the use of multiple valves).

As described herein, the rotary louver concept employed by the first louver plate assembly 112 and the second louver plate assembly 114 may be used to enable proportional/incremental flow control (e.g., partial fluid flow that increases or decreases in flow area, either from a closed state to an open state or visa versa). For example, as the first louver plate 150a rotates from the fourth position to the fourth intermediate position, the third housing port 120 transitions from a fully open state and proportionally closes off, while the first housing port 116 opens up. It should be appreciated that the rotary actuator 132 may rotate the first louver plate 150a to any number of positions between the fourth position and the fourth intermediate position to adjust the flow areas defined by the third housing port 120 and the first housing port 116 as desired. Similar proportional control is exemplified with the second louver plate 150b transitioning from the first position to the first intermediate position, and from the third position to the third intermediate position.

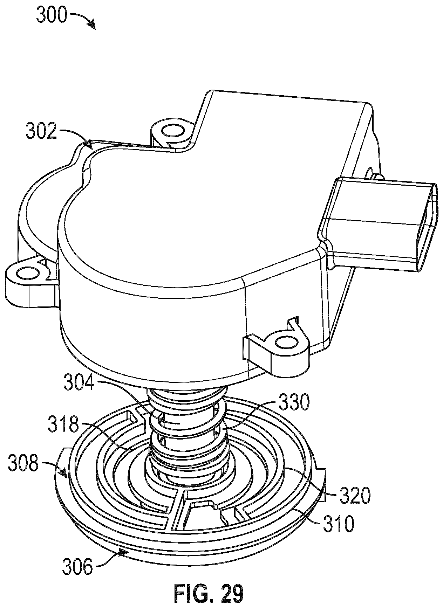

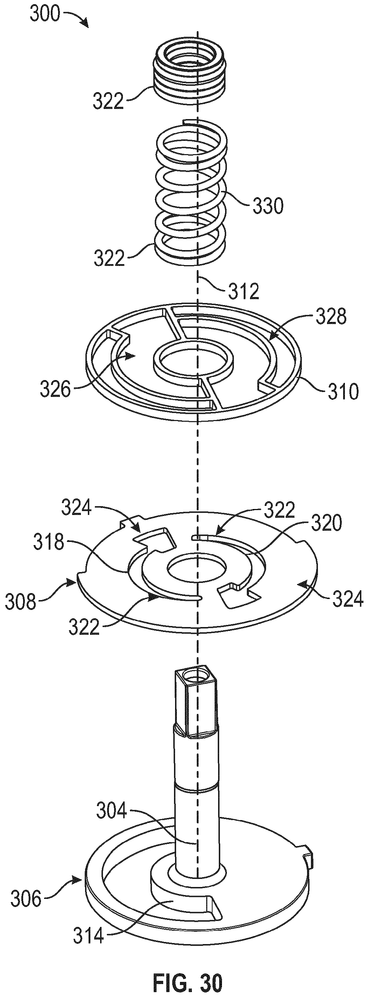

FIGS. 29-32 show an exemplary embodiment of a thermal control valve 300, according to an exemplary embodiment. In general, the thermal control valve 300 is configured to proportionally open or close one or more ports to vary the flow area between two or more ports in a housing. The thermal control valve 300 includes a rotary actuator 302 (e.g., a rotary motor, a stepper motor, an electric motor, etc.) that is coupled to a drive shaft 304, a louver plate 306, a static seal plate 308, and a static seal 310. The drive shaft 304 is coupled to the louver plate 306 and defines a drive axis 312. In the exemplary embodiment, the drive shaft 304 is formed integrally with (e.g., as a unitary component) the louver plate 306. In some embodiments, the drive shaft 304 and the louver plate 306 are separate components that are coupled together.

In the exemplary embodiment, the louver plate 306 defines a generally circular or round shape and includes a cutout, aperture, or channel, shown as louver slot 314. The louver slot 314 extends completely through the louver plate 306 (e.g., from a top surface to an opposing bottom surface) so that fluid flow can be provided through the louver slot 314. In the exemplary embodiment, the louver slot 314 defines a generally arcuate or curved shape that extends circumferentially about the drive axis 312 approximately one hundred and eighty degrees. In some embodiments, the louver slot 314 may extend circumferentially more or less than one hundred and eighty degrees.

The static seal plate 308 is arranged axially between the louver plate 306 and the static seal 310. In the exemplary embodiment, the static seal plate 308 is in engagement with a top or first surface 316 of the louver plate 306, so that a seal is formed between the static seal plate 308 and the top or first surface 316 of the louver plate 306. In the exemplary embodiment, the static seal plate 308 includes a plurality of cutouts, slots, or channels that each define a varying flow area in a circumferential direction about the drive axis 312. Specifically, the static seal plate 308 includes a first cutout, aperture, or channel, shown as first slot 318 and a second cutout, aperture, or channel, shown as second slot 320. The first slot 318 is rotationally symmetric to the second slot 320 about the drive axis 312. In the exemplary embodiment, the first slot 318 and the second slot 320 each define a generally arrow-shaped slot that includes a tail or first portion 322 and a head or second portion 324. The tail or first portion 322 defines a gradually increasing flow area as the first slot 318 extends circumferentially in a direction from the tail or first portion 322 toward the head or second portion 324. Continuing circumferentially in a direction from the tail or first portion 322 toward the head or second portion 324, the first slot 318 and the second slot 320 define a step-change increase in flow area at the interface between the tail or first portion 322 and the head or second portion 324, where a radial width of the first slot 318 and the second slot 320 defines a step-change increase. Alternatively, moving circumferentially along the first slot 318 and the second slot 320 in a direction from the head or second portion 324 toward the tail or first portion 322, the first slot 318 and the second slot 320 define a step-change decrease in flow area at the interface between the tail or first portion 322 and the head or second portion 324. Accordingly, the flow area through the static seal plate 308 may be proportionally adjusted based on a rotational position of the louver plate 306 and, specifically, what portions of the first slot 318 and/or the second slot 320 are rotationally aligned with the louver slot 314. In some embodiments, the first slot 318 and the second slot 320 may be shaped differently to define a different change in flow area as the louver plate 306 is rotated relative to the first slot 318 and the second slot 320.

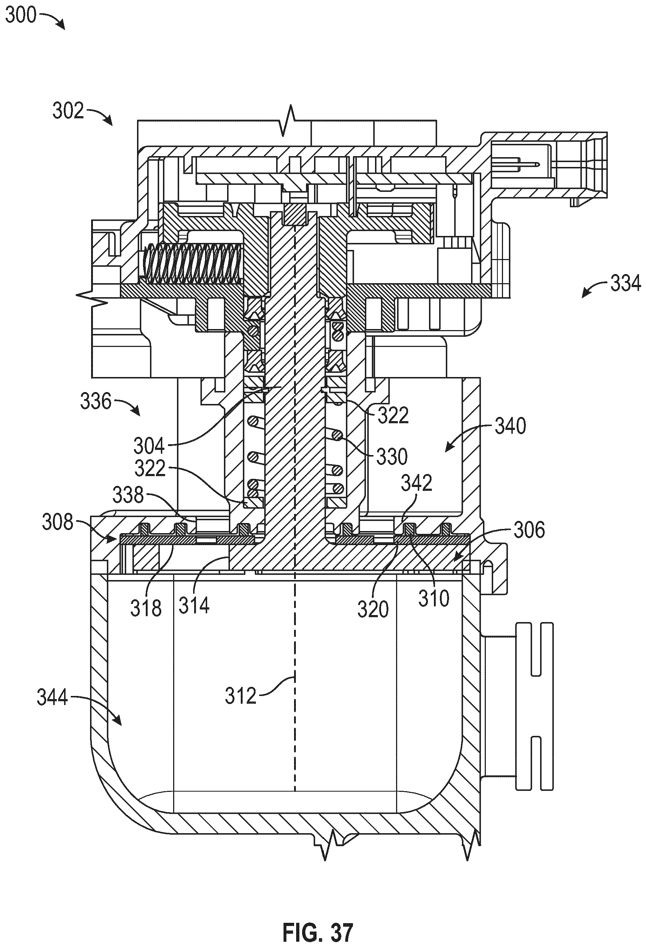

The static seal plate 308 is sealed between both the louver plate 306 and the static seal 310. In the exemplary embodiment, the static seal plate 308 includes a first channel 326 and a second channel 328. When assembled, the first channel 326 surrounds or borders the first slot 318 and the second channel 328 surrounds or borders the second slot 320, so that both the first slot 318 and the second slot 320 are sealed between the louver plate 306 and a housing that the thermal control valve 300 is mounted within (see, e.g., FIG. 37). In the exemplary embodiment, a spring 330 is received on the drive shaft 304 and is biased between a pair of spring flanges 332. When assembled, the spring 330 is biased between the spring flanges 332 (and against a housing) so that the louver plate 306 applies a compressive force on the static seal plate 308 and the static seal 310, which aids in maintaining a seal between each of the louver plate 306, the static seal plate 308, the static seal 310, and the housing (see, e.g., FIG. 37).

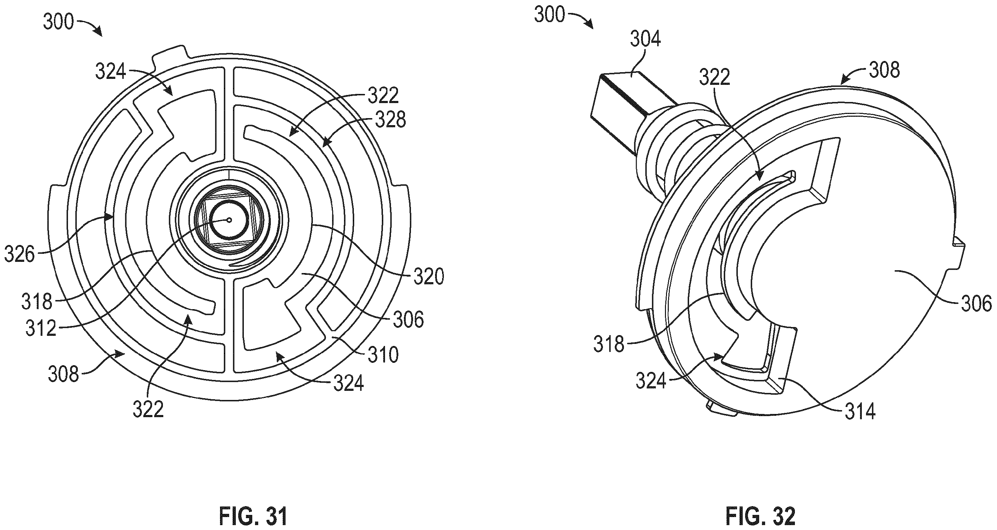

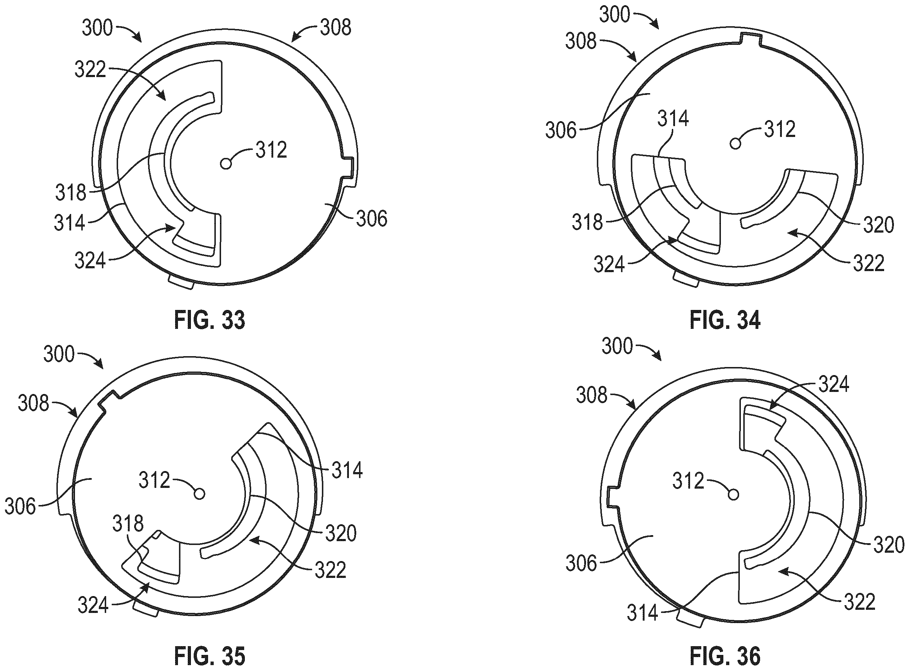

With reference to FIGS. 32-36, the thermal control valve 300 may be mounted within a housing assembly 334 that includes a first chamber 336 having a first port 338, a second chamber 340 having a second port 342, and a third chamber 344. The thermal control valve 300 is configured to selectively provide or inhibit fluid communication between the first chamber 336 and the third chamber 344 through the first port 338, and selectively provide or inhibit fluid communication between the second chamber 340 and the third chamber 344 through the second port 342. Additionally, as the louver plate 306 is selectively rotated relative to the first slot 318 and the second slot 320, the flow area provided through the first port 338 and/or the second port 342 is proportionally controlled, depending on the rotational position of the louver slot 314 along the first slot 318 and/or the second slot 320. For example, the louver plate 306 is selectively rotatable between a first position (FIG. 33), a second position (FIG. 36), and any position between the first position and the second position. In the first position, the louver slot 314 rotationally aligns with an entirety of the first slot 318, so that fluid flow is provided through the first port 338 with a maximum flow area provided by the first slot 318 (e.g., the louver plate 306 does not block any portion of the first slot 318). In the first position, the louver plate 306 blocks or closes the second slot 320, which prevents fluid flow through the second port 342.

As the louver plate 306 is rotated from the first position in a direction toward the second position (see, e.g., FIG. 34), the louver plate 306 begins to cover or close the tail or first portion 322 of the first slot 318, which decreases the flow area through the first port 338. The louver slot 314 also begins to rotationally align with the tail or first portion 322 of the second slot 320, which provides fluid flow through the second port 342 and gradually increases the flow area (e.g., from no flow) through the second port 342. As the louver plate 306 continues to rotate toward the second position (see, e.g., FIG. 35), the flow area through the first port 338 proportionally decreases as the louver plate 306 blocks or closes more of the first slot 318, and the flow area through the second port 342 proportionally increases as the louver slot 314 rotationally aligns with more of the second slot 320. Eventually, once the louver plate 306 reaches the second position, the louver plate 306 blocks or closes the first slot 318, which prevents fluid flow through the first port 338, and the louver slot 314 rotationally aligns with an entirety of the tail or first portion 322, so that fluid flow is provided through the second port 342 with a maximum flow area provided by the tail or first portion 322 (e.g., the louver plate 306 does not block any portion of the tail or first portion 322). In some embodiments, the louver plate 306 may rotate back and forth between the first position and the second position (e.g., from the first position to the second position, and then from the second position to the first position). In this way, for example, the flow area changes provided during the transition from the first position to the second position may be reversed (e.g., the tail or first portion 322 proportionally decreases in flow area, and the first slot 318 proportionally increases in flow area).

As utilized herein with respect to numerical ranges, the terms "approximately," "about," "substantially," and similar terms generally mean +/- 10% of the disclosed values. When the terms "approximately," "about," "substantially," and similar terms are applied to a structural feature (e.g., to describe its shape, size, orientation, direction, etc.), these terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the thermal management control valves 100, 200 as shown in the various exemplary embodiments is illustrative only. Additionally, any element disclosed in one embodiment may be incorporated or utilized with any other embodiment disclosed herein.

## Claims

1. A thermal management control valve comprising:
a housing assembly including a first housing section and a second housing section;
a rotary actuator coupled to a drive shaft that extends into the housing assembly; and
a louver plate assembly enclosed within the housing assembly and including:
a louver plate including a louver cutout extending through the louver plate, wherein the louver plate is coupled to the drive shaft so that selective rotation of the drive shaft is configured to rotate the louver plate;
a first seal assembly arranged between the louver plate and the first housing section, wherein the first seal assembly includes a plurality of inner walls that define a plurality of first fluid passageways between the louver plate and the first housing section; and
a second seal assembly arranged between the louver plate and the second housing section, wherein the second seal assembly defines a second fluid passageway between the louver plate and the second housing section,
wherein selective rotation of the louver plate rotationally aligns the louver cutout with one or more of the plurality of first fluid passageways and the second fluid passageway to provide fluid communication between the one or more of the plurality of first fluid passageways and the second fluid passageway.

2. The thermal management control valve of claim 1, wherein the plurality of first fluid passageways includes two or more fluid passageways.

3. The thermal management control valve of claim 1, wherein the first seal assembly includes:
a first static seal plate in engagement with a first surface of the louver plate;
a first seal plate; and
a first static seal sealed between the first housing section and the first seal plate, wherein the first seal plate is arranged between the first static seal plate and the first static seal.

4. The thermal management control valve of claim 3, wherein the plurality of inner walls are formed by each of the first static seal plate, the first seal plate, and the first static seal plate; and/or
wherein the first static seal plate includes an anti-rotation surface that abuts a corresponding stop surface within the housing assembly to limit rotation of the first static seal plate relative to the housing assembly; and/or
wherein the first seal plate includes a plurality of tabs that protrude outwardly from an outer wall of the first seal plate, and wherein each of the plurality of tabs is received within a corresponding recess formed in the housing assembly.

5. The thermal management control valve of claim 3, wherein the second seal assembly includes:
a second static seal plate in engagement with a second surface of the louver plate;
a second seal plate; and
a second static seal sealed between the second housing section and the second seal plate, wherein the second seal plate is arranged between the second static seal plate and the second static seal.

6. The thermal management control valve of claim 5, wherein each of the second static seal plate, the second seal plate, and the second static seal defines an annular shape.

7. The thermal management control valve of claim 5, wherein each of the second static seal plate, the second seal plate, and the second static seal includes a plurality of second inner walls that define the second fluid passageway and a third fluid passageway between the louver plate and the second housing section;
preferably wherein a rotational orientation of the first seal assembly about a center axis is different than a rotational orientation of the second seal assembly.

8. The thermal management control valve of claim 1, wherein the drive shaft includes a threaded portion;
preferably wherein the threaded portion of the drive shaft is rotationally coupled to gear teeth arranged around a periphery of the louver plate.

9. The thermal management control valve of claim 1, further comprising a second louver plate assembly enclosed within the housing assembly, wherein the second louver plate assembly defines a plurality of third passageways between a second louver plate and the first housing section, and a plurality of fourth passageways between the second louver plate and the second housing section.

10. The thermal management control valve of claim 1, wherein selective rotation of the louver plate proportionally opens or closes the one or more of the plurality of first fluid passageways.

11. The thermal management control valve of claim 1, wherein each of the plurality of first fluid passageways and the second fluid passageway is in fluid communication with a fluid port arranged on the housing assembly.

12. A thermal management control valve comprising:
a housing assembly including a first housing section and a second housing section, wherein the first housing section includes a plurality of first fluid ports and the second housing section includes a plurality of second fluid ports;
a rotary actuator coupled to a drive shaft that extends into the housing assembly; and
a louver plate assembly enclosed within the housing assembly and including:
a louver plate including a louver cutout extending through the louver plate, wherein the louver plate is coupled to the drive shaft so that selective rotation of the drive shaft is configured to rotate the louver plate;
a first seal assembly sealed between the louver plate and each of the plurality of first fluid ports; and
a second seal assembly sealed between the louver plate and each of the plurality of second fluid ports,
wherein selective rotation of the louver plate rotationally aligns the louver cutout with one or more of the plurality of first fluid ports and one or more of the plurality of second fluid ports to provide fluid communication between the one or more of the plurality of first fluid ports and the one or more of the plurality of second fluid ports.

13. The thermal management control valve of claim 12, wherein selective rotation of the louver plate proportionally opens or closes a flow area between the one or more of the plurality of first fluid ports and the one or more of the plurality of second fluid ports; and/or
wherein a rotational orientation of the first seal assembly about a center axis is different than a rotational orientation of the second seal assembly.

14. A thermal management control valve comprising:
a housing assembly including a first housing section and a second housing section;
a rotary actuator coupled to a drive shaft that extends into the housing assembly;
a first louver plate assembly enclosed within the housing assembly and including a first louver plate arranged about a first central axis; and
a second louver plate assembly enclosed within the housing assembly and including a second louver plate arranged about a second central axis that is spaced from the first central axis, wherein the first louver plate assembly and the second louver plate assembly both include a first seal plate assembly and a second seal plate assembly,
wherein the first seal plate assembly of the first louver plate assembly is sealed between the first louver plate and the first housing section, and the second seal plate assembly of the first louver plate assembly is sealed between the first louver plate and the second housing section,
wherein the first seal plate assembly of the second louver plate assembly is sealed between the second louver plate and the first housing section, and the second seal plate assembly of the second louver plate assembly is sealed between the second louver plate and the second housing section, and
wherein selective rotation of the drive shaft is configured to rotate the first louver plate and the second louver plate in opposing directions.

15. The thermal management control valve of claim 14, wherein the first louver plate includes a first louver cutout and the second louver plate includes a second louver cutout, and wherein selective rotation of the first louver plate and the second louver plate rotationally aligns the first louver cutout with one or more of a plurality of first fluid passageways, and aligns the second louver cutout with one or more of a plurality of second fluid passageways.
